# EUROPÄISCHE PATENTSCHRIFT

(11) **EP 4 311 795 B1**
(45) Veröffentlichungstag und Bekanntmachung des Hinweises auf die Patenterteilung: **18.11.2026**
(21) Anmeldenummer: 22187888.7
(22) Anmeldetag: 29.07.2022
(51) Int. Cl.: B65G 1/04, B65G 43/00, G05D 1/00, G05B 19/418

(54) **SHUTTLE-SYSTEM UND VERFAHREN ZUM BETREIBEN EINES SHUTTLE-SYSTEMS**
SHUTTLE SYSTEM AND METHOD FOR OPERATING A SHUTTLE SYSTEM
SYSTÈME DE NAVETTE ET PROCÉDÉ PERMETTANT DE FAIRE FONCTIONNER UN SYSTÈME DE NAVETTE

(43) Veröffentlichungstag der Anmeldung: 31.01.2024
(73) Patentinhaber: Gebhardt Fördertechnik GmbH, 74889 Sinsheim (DE)
(72) Erfinder: BRANNER, Fabian, 79189 Bad Krozingen (DE); GEBHARDT, Marco, 74889 Sinsheim (DE)
(74) Vertreter: Patentanwälte und Rechtsanwalt Weiß, Arat & Partner mbB

(56) Entgegenhaltungen:
- EP-A1- 2 444 171
- WO-A1-2021/186358
- WO-A1-96/31381

## Beschreibung

### Technisches Gebiet

Die Erfindung betrifft ein Shuttle-System sowie ein Verfahren zum Betreiben eines Shuttle-Systems gemäss den unabhängigen Ansprüchen.

### Stand der Technik

Derartige Shuttle-Systeme und zugehörige Verfahren sind grundsätzlich bekannt. Um WLAN-Funksignale auf ein Shuttle eines Shuttle-Systems zu übertragen, sind beispielsweise Rundstrahlantennen bekannt, welche üblicherweise an einem Eingang einer Gasse montiert sind, um die betreffende Gasse, oder im Allgemeinen den betreffenden Fahrweg im Regal, mit WLAN-Funksignalen zu versorgen.

Die WO 96/31381 A1 offenbart ein Shuttle-System gemäß dem Oberbegriffe des Anspruchs. Ferner offenbart die WO 96/31381 A1 ein Verfahren zum Betreiben eines Shuttle-Systems mit dem Schritt des Übertragens eines Funksignals von einer Steuerungseinrichtung über einen Leckwellenleiter auf das Shuttle.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein Shuttle-System gemäss der vorliegenden Erfindung nach Anspruch 1, umfasst ein Regal, ein Shuttle sowie eine Steuerungseinrichtung, wobei das Shuttle eingerichtet ist, Befehle von der Steuerungseinrichtung zu empfangen, welche mittels Funksignalen übertragen werden. Dem zumindest einen Regal ist ein Leckwellenleiter zugeordnet, welcher eingerichtet ist, die Funksignale abzustrahlen.

Bei dem Regal, welches manchmal auch als Lager bezeichnet wird, kann es sich um ein Kanallager handeln. Im Allgemeinen kann es sich um ein beliebiges Regal handeln, innerhalb dem sich das Shuttle, beispielsweise auf entsprechenden Fahrwegen oder Schienen, bewegen kann. Bei dem Regal kann es sich um ein Hochregal handeln.

Vorzugsweise umfasst das Shuttle-System eine Vielzahl von Shuttles, eine Vielzahl von Fahrwegen, insbesondere Hauptfahrwegen, sowie eine Vielzahl von Leckwellenleitern. Sind insbesondere die vorgenannten Merkmale nachstehend im Singular genannt und näher erläutert, so gelten diese Erläuterungen jeweils auch für das betreffende Merkmal im Plural.

Ist das Regal als Kanallager ausgebildet, so kann es eine Vielzahl von Lagerkanälen umfassen, welche einfach- oder mehrfachtief sind, d.h. einen oder mehrere hintereinander angeordnete Lagerplätze umfassen. Das Shuttle kann die Lagerplätze anfahren und Güter auf den Lagerplätzen einlagern oder dort gelagerte Güter auslagern oder umlagern. Bei den Gütern kann es sich um beliebige Lager- oder Fördergüter, nachstehend ausschliesslich als "Fördergüter" bezeichnet, handeln, welche beispielsweise auf Paletten oder dergleichen gelagert sind. Das Kanallager kann also als Palettenlager, insbesondere als Paletten-Kanallager ausgebildet sein.

Die Fördergüter können auch auf anderen Ladehilfsmitteln gelagert sein, es müssen nicht zwingend Ladungsträger wie Paletten zum Einsatz kommen. Ist nachstehend von Paletten die Rede, so gelten die Ausführungen analog für beliebige Ladehilfsmittel. Beispielsweise kann an Grossladungsträger, Boxen wie beispielsweise Gitterboxen, Container, Gestelle, Behälter, Werkstückträger oder dergleichen gedacht sein, welche von Shuttles bewegt werden können.

Das Shuttle ist vorzugsweise ein horizontal sich bewegendes Fahrzeug zum Ein-, Aus und Umlagern von Gütern in einem Regal. Vorzugsweise ist das Shuttle, insbesondere auf Rädern oder Rollen, ausschliesslich horizontal beweglich. Etwaige vertikale Bewegungen des Shuttles, insbesondere ein Ebenen-Wechsel, können durch Lifte erfolgen, welche dem Shuttle-System zugeordnet sein können.

Vorzugsweise ist das Shuttle eingerichtet, sich horizontal in zwei Richtungen zu bewegen, welche vorzugsweise orthogonal zueinander stehen. Vorzugsweise kann sich das Shuttle also nicht nur entlang einer in der horizontalen Ebene verlaufenden Geraden bewegen, sondern auch orthogonal zu dieser Geraden.

Bei dem Shuttle kann es sich um ein Paletten-Shuttle handeln. Derartige Paletten-Shuttles werden von der Anmelderin unter der Bezeichnung StoreBiter^{®} OLPS vertrieben.

Im Allgemeinen kann das Shuttle eine Tragkraft von mehreren Hundert Kilogramm, bis hin zu über Eintausend Kilogramm haben.

Um das Fördergut im Lager transportieren sowie aufnehmen und abstellen zu können, verfügt das Shuttle vorzugsweise über einen entsprechenden Hubmechanismus. Zur Aufnahme eines Förderguts kann das Shuttle unter das Fördergut fahren und dieses mittels des Hubmechanismus aufnehmen. Um das Fördergut einzulagern, wird letzteres mittels des Hubmechanismus abgesenkt und beispielsweise auf Tragschienen abgestellt, welche beispielsweise in einem Lagerkanal angeordnet sind. Nach dem Abstellen des Förderguts, beispielsweise auf den vorbeschriebenen Tragschienen, ist das Shuttle wieder unbeladen und kann das nächste Fördergut aufnehmen.

Anstelle des Hubmechanismus oder zusätzlich zu dem Hubmechanismus kann das Shuttle andere Mittel aufweisen, um ein Fördergut aufzunehmen und abzustellen.

Das Shuttle weist vorzugsweise einen Energiespeicher auf, und kann sich daher, insbesondere nach Erhalt und zur Ausführung eines entsprechenden Befehls, eigenständig bewegen.

Der Energiespeicher kann ein Akkumulator oder vorzugsweise ein Kondensator, insbesondere ein Superkondensator (auch Ultrakondensator, Doppelschichtkondensator, Supercapacitor oder SC genannt) sein.

Ein Befehl kann ein Auftrag, beispielsweise zur Durchführung einer Lageroperation, oder ein Bestandteil eines solchen Auftrags sein. Eine Lageroperation kann ein Ein-, Aus- oder Umlagern sein. Ein Befehl kann aber auch eine andere unmittelbar oder abhängig von einer Bedingung durchzuführende Aktion des Shuttles bewirken.

Das Shuttle-System, insbesondere das Regal, kann Gassen umfassen, welche aus der Intralogistik grundsätzlich bekannt sind. Das Shuttle-System oder das Regal kann jedoch auch gänzlich ohne Gassen gebaut sein.

Eine Gasse ist im Rahmen der vorliegenden Erfindung beispielsweise eine zweidimensional, insbesondere vertikal sich erstreckende und im Wesentlichen offene Struktur innerhalb eines Regals, welche Schienen oder Fahrwege für Shuttles, jedoch keine Lagerplätze für Fördergut aufweist.

Das Regal kann zumindest eine, vorzugsweise jedoch auch mehrere Ebenen umfassen. Die vorgenannten Ebenen sind vorzugsweise übereinander angeordnet und können jeweils eine Vielzahl der bereits beschriebenen Fahrwege und Lagerkanäle umfassen, die von den Shuttles bedient und befahren werden.

Im Allgemeinen kann das Regal mehrere Fahrwege und mehrere, insbesondere rechtwinklig zu diesen Fahrwegen angeordnete Lagerkanäle mit einem, zwei, drei, vier oder mehr Lagerplätzen umfassen. Sind Hauptfahrwege sowie Verbindungs-Wege zwischen diesen Hauptfahrwegen im Lager vorhanden, so können die Lagerkanäle rechtwinklig zu den Hauptfahrwegen angeordnet sein. Vorzugsweise verlaufen die Hauptfahrwege parallel zueinander.

Der Lagerkanal bzw. die Lagerkanäle können einen Kanal-Eingang aufweisen. Durch diesen Kanal-Eingang gelangt das Shuttle in den Lagerkanal und zu den Lagerplätzen. Ein in der Regel gegenüber des Kanal-Eingangs liegendes Kanal-Ende kann als Sackgasse ausgestaltet sein. Alternativ kann der Lagerkanal zwei Kanal-Eingänge aufweisen, und von beiden Seiten befahrbar sein.

Vorzugsweise sind die Lagerkanäle zumindest für die Shuttles nicht als Sackgasse ausgebildet, sondern ermöglichen ein Einfahren von beiden Seiten und somit auch ein Durchqueren des Lagerkanals durch das Shuttle.

Die Hauptfahrwege können Gassen sein. Allgemein können die Hauptfahrwege die vorrangig von den Shuttles genutzten Fahrwege sein und/oder diejenigen Fahrwege, auf welchen sich die Shuttles am häufigsten aufhalten.

Die vorgenannte Kombination aus Hauptfahrwegen und Verbindungs-Wegen kommt insbesondere bei weiter unten beschriebenen Ebenen-gebundenen und bei ebenfalls weiter unten beschriebenen ungebundenen Shuttle-Systemen in Betracht.

Die Fördergüter können den Shuttles an einer geeigneten Schnittstelle, beispielsweise an einer Übergabestation oder dergleichen, angedient werden. Beispielsweise kann dem Regal eine Lagervorzone zugeordnet sein, über welche die Fördergüter eingespeist werden. Ferner kann daran gedacht sein, dem Shuttle-System Flurförderzeuge, insbesondere fahrerlose Transportsysteme (FTS) zuzuordnen. **FTS** können in einer Lagervorzone, an geeigneten Übergabestationen, oder in anderer geeigneter Weise die Fördergüter direkt oder indirekt an die Shuttles übergeben.

Unabhängig vom Vorhandensein einer Lagervorzone kann auch daran gedacht sein, dass die Fördergüter über beliebige Mittel der Fördertechnik an die Shuttles übergeben oder im Allgemeinen in das Regal eingespeist werden. Hierbei kann beispielsweise an Krane; Hebezeuge; gleislose Flurfördermittel wie Stapler; Rollenbahnen; Rollenförderer; Kettenförderer sowie an Stetigförderer wie Bandförderer; Bahnsysteme oder dergleichen gedacht sein.

Bei der Steuerungseinrichtung kann es sich um eine beliebige Einrichtung handeln, welche geeignet ist, einen Befehl an das Shuttle zu senden. Eine Kommunikation zwischen Shuttle und Steuerungseinrichtung kann unidirektional sein, wobei das Shuttle lediglich Befehle der Steuerungseinrichtung empfängt. Vorzugsweise ist die Kommunikation bidirektional, so dass das Shuttle auch Informationen über entsprechende Funksignale an die Steuerungseinrichtung senden kann. Hierzu kann das Shuttle beispielsweise mit einem weiter unten beschriebenen WLAN-Funkmodul (WLAN-Client) ausgestattet sein.

Die Steuerungseinrichtung kann beispielsweise ein Lagerverwaltungssystem sein. Ein Lagerverwaltungssystem ist vorzugsweise ein System zur Steuerung, Kontrolle und Optimierung eines Lagers. Lagerverwaltungssysteme werden manchmal auch als Warehouse Management Systeme bezeichnet. In einem einfachen Beispiel kann jedes System zur Steuerung eines Lagers als Lagerverwaltungssystem im Rahmen der vorliegenden Erfindung angesehen werden. Vorzugsweise handelt es sich jedoch bei einem Lagerverwaltungssystem um ein komplexes und übergeordnetes System, welches auch der Kontrolle und Optimierung des Lagers dient, und vor allem aus den dafür nötigen Software-Komponenten und den für ihre Funktion nötigen Hardware-Komponenten bestehen kann.

Der Begriff Steuerungseinrichtung umfasst aber auch ein dem Lagerverwaltungssystem übergeordnetes System bestehend aus dem Lagerverwaltungssystem und weiteren Komponenten wie beispielsweise einem Enterprise Resource Planning System (ERP-System), einem Materialfluss-System und Speicherprogrammierbarer Steuerungen (SPS).

Ein Einlagern meint vorzugsweise ein Abstellen eines Förderguts, beispielsweise auf einem Lagerplatz in einem Lagerkanal, insbesondere durch ein Shuttle. Ein Auslagern meint vorzugsweise ein Aufnehmen eines Förderguts, welches beispielsweise auf einem Lagerplatz in einem Lagerkanal steht, vorzugweise durch ein Shuttle. Ein Umlagern meint ein Aufnehmen eines Förderguts, welches beispielsweise auf einem Lagerplatz in einem Lagerkanal steht, und ein anschliessendes Verbringen dieses Förderguts an einen anderen Ort innerhalb des Lagers.

Das Shuttle-System kann als Ebenen-gebundenes System ausgebildet sein und eine oder vorzugsweise mehrere Ebenen umfassen. Optional können Gassen vorhanden sein. Hierbei ist auf jeder Ebene zumindest ein Shuttle vorhanden. Vorzugsweise sind zumindest zwei Shuttles auf jeder Ebene vorhanden, so dass bei einem beispielsweise störungsbedingten Ausfall eines Shuttles das zumindest eine andere Shuttle die Ebene weiterhin bedienen kann. Diese Shuttles können sich vorzugsweise entlang der Hauptfahrwege und, insbesondere über Verbindungswege, quer zu diesen Hauptfahrwegen, d.h. beliebig innerhalb der Ebenen bewegen. Ein solches System kann Lifte für das Fördergut umfassen, insbesondere, wenn mehrere Ebenen vorhanden sind.

Das Shuttle-System kann alternativ als Gassen-gebundenes System ausgebildet sein und eine oder vorzugsweise mehrere Ebenen sowie eine oder vorzugsweise mehrere Gassen umfassen. Die Shuttles können sich in einem solchen System innerhalb der Gassen horizontal und vertikal bewegen, die Gassen jedoch nicht wechseln. Eine horizontale Bewegung der Shuttles ist somit auf die jeweils zugehörige Gasse beschränkt. Ein solches System kann Lifte für die Shuttles umfassen, um den Shuttles einen Ebenen-Wechsel zu ermöglichen. Üblicherweise können die Shuttles sich nur horizontal bewegen und benötigen daher für einen Ebenen-Wechsel innerhalb der Gasse einen entsprechenden Lift.

Bei dem Ebenen-gebundenen System und bei dem Gassen-gebundenen System haben die Shuttles vorzugsweise zwei Freiheitsgrade der Bewegung.

Das Shuttle-System kann auch als Gassen- und Ebenen-gebundenes Shuttle-System ausgebildet sein. In einem solchen System besteht üblicherweise nur ein Freiheitsgrad der Bewegung.

Ferner kann das Shuttle-System als ungebundenes Shuttle-System ausgebildet sein und eine oder vorzugsweise mehrere Ebenen umfassen. Optional können Gassen vorhanden sein. In einem solchen System können Lifte für die Shuttles vorhanden sein, welche diesen eine Bewegung in vertikaler Richtung ermöglichen. Durch Fahrwege quer zu den Hauptfahrwegen oder quer zu etwaigen Gassen haben die Shuttles in einem ungebundenen System drei Freiheitsgrade der Bewegung, sofern die vorgenannten Lifte vorhanden sind. Ungebundene Systeme ermöglichen eine hohe Flexibilität und kommen bei der vorliegenden Erfindung daher bevorzugt zum Einsatz. Der Durchsatz ungebundener Shuttle-Systeme kann durch Einschleusen weiterer Shuttles erhöht werden.

Die Funksignale werden vorzugsweise mittels eines Funknetzwerks übertragen, vorzugsweise mittels WLAN. Hierbei wird unter WLAN im Rahmen der vorliegenden Erfindung insbesondere ein Funknetzwerk verstanden, welches auf dem Standard **IEEE** 802.11 basiert. Wird im Rahmen der vorliegenden Erfindung von Funksignalen gesprochen, so sind insbesondere WLAN-Funksignale innerhalb eines WLAN gemeint. Entsprechendes gilt für den Begriff Funkverbindung.

Eine Funkverbindung bezeichnet im Rahmen der vorliegenden Erfindung vorzugsweise eine über eine gewisse Zeit erfolgende oder auf eine gewisse Zeit angelegte Übersendung von Funksignalen, insbesondere einen Austausch von Funksignalen. Hierbei kann eine Funkverbindung im Vergleich zum Übersenden eines Signals auch erst dann als bestehend angesehen werden, wenn beispielsweise ein Client, welcher eine Funkverbindung zu einem Zugangspunkt aufbaut, sich in ein vom Zugangspunkt zur Verfügung gestelltes drahtloses Netzwerk, insbesondere ein WLAN, eingewählt oder in diesem drahtlosen Netzwerk angemeldet hat.

Wenn nachfolgend von einer Funkverbindung die Rede ist, so gelten die entsprechenden Überlegungen analog auch für Funksignale, welche die vorstehende Definition einer Funkverbindung nicht erfüllen.

Zum Empfang der mittels Funksignalen übertragenen Befehle kann das Shuttle einen WLAN-Client umfassen. Ein WLAN-Client ist im Rahmen der vorliegenden Erfindung beispielsweise ein Gerät, welches eine Verbindung zu einem Zugangspunkt innerhalb eines WLAN aufbauen kann. Der WLAN-Client ist vorzugsweise mit einer Antenne zum Empfang von WLAN-Funksignalen verbunden. Bei dem WLAN-Client kann es sich beispielsweise um ein Funkmodul handeln, welches eine integrierte Antenne aufweist oder mit einer Antenne verbunden ist, und im sogenannten "Client-Mode", also im Client-Modus betrieben wird.

Die Antenne kann eine Stabantenne sein. Die Antenne kann eine Rundstrahlcharakteristik aufweisen. Es kann aber auch daran gedacht sein, eine Richtantenne einzusetzen. Ferner kann daran gedacht sein, möglichst flache und kleine Antennen einzusetzen, beispielsweise gedruckte Antennen. Eine solche gedruckte Antenne kann vorwiegend oder vollständig aus einer Platine (printed circuit board, PCB) bestehen.

Die Antennen sind vorzugsweise derart am Shuttle angeordnet, dass ein möglichst abschirmungsarmer Empfang ermöglicht wird, wobei die Antennen zugleich möglichst vor Beschädigungen geschützt sind.

Leckwellenleiter werden auch als Schlitzkabel bezeichnet. Hierbei kann es sich um Koaxialkabel mit einem Innenleiter und einem Aussenleiter handeln, wobei zwischen Innen- und Aussenleiter ein Dielektrikum angeordnet ist. Der Aussenleiter ist vorzugsweise von einem Kabelmantel umgeben. Charakteristisch für ein als Leckwellenleiter ausgebildetes Koaxialkabel sind Ausnehmungen im Aussenleiter, durch welche Hochfrequenz-Funksignale abgestrahlt oder aufgenommen werden können. Derartige Leckwellenleiter können WLAN-Funksignale abgeben und aufnehmen.

Leckwellenleiter werden im Rahmen der vorliegenden Erfindung vorzugsweise als sehr lange Antennen zur Abstrahlung von Funksignalen genutzt. Hierzu sind ein oder mehrere Leckwellenleiter jeweils einem nachstehend noch beschriebenen Zugangspunkt zugeordnet, um von diesem mit den abzustrahlenden Signalen versorgt zu werden und um entsprechende Signale der Shuttles an den Zugangspunkt und die Steuerungseinrichtung weiterzuleiten.

Zusätzlich kann das Shuttle-System eingerichtet sein, Befehle an das Shuttle auch unmittelbar von einem Sensor, welcher vorzugsweise mit einer speicherprogrammierbaren Steuerung (SPS) in Verbindung steht, über den Zugangspunkt und die daran angebundenen Leckwellenleiter an das Shuttle zu leiten. Ein solcher Sensor kann beispielsweise ein Öffnen einer Tür und somit eine potentielle Gefahr für durch diese Tür in das Regal eintretende Personen feststellen.

Im Allgemeinen kann daran gedacht sein, dass das Shuttle in einen nachstehend noch näher beschriebenen sicheren Zustand versetzt wird, wenn ein Sensor eine potentielle Gefahr oder eine Störung, beispielsweise das Öffnen einer in einen Gefahrenbereich führenden Tür erkennt. Ein entsprechender Befehl kann über die Steuerungseinrichtung oder unter Umgehung der Steuerungseinrichtung, und somit besonders schnell, an einen entsprechenden Zugangspunkt übertragen werden.

Wie nachstehend noch näher beschrieben wird, ist das Shuttle-System vorzugsweise in mehrfacher Hinsicht redundant ausgeführt. Vorzugsweise kann daher bei der Übertragung von Befehlen ein nachstehend noch näher beschriebenes parallel redundancy protocol (PRP) zum Einsatz kommen, um den betreffenden Befehl zu duplizieren, und parallel über zwei Netzwerke zu übertragen. Selbst wenn nur zwischen einem der beiden Netzwerke und dem betreffenden Shuttle eine Funkverbindung besteht, wird beispielsweise das in den Gefahrenbereich einfahrende Shuttle somit zuverlässig in den sicheren Zustand versetzt. Hierbei kann stets daran gedacht sein, dass nach dem Erkennen einer potentiellen Gefahrensituation oder dergleichen durch einen Sensor nur diejenigen Shuttles in den sicheren Zustand versetzt werden, welche sich in der Nähe dieses Sensors befinden. Beispielsweise können dies sämtliche in derselben Ebene befindliche Shuttles sein, oder ein oder sämtliche Shuttles innerhalb einer bestimmten Entfernung zu diesem Sensor.

Die Erfinder haben festgestellt, dass der Einsatz von Leckwellenleitern anstelle beispielsweise von Richtantennen, welche Gassen und im Allgemeinen Fahrwege der Shuttles mit Funksignalen versorgen, eine bessere Versorgung der Shuttles mit Funksignalen, also einen besseren "Empfang", gewährleisten. Dies gilt für alle weiter oben beschriebenen Konfigurationen, d.h. für Ebenengebundene Shuttle-Systeme, für Gassen-gebundene Systeme, für Ebenen- und Gassen-gebundene Systeme sowie für ungebundene Systeme.

Die Leckwellenleiter können hierbei entlang der Fahrwege, beispielsweise entlang der Hauptfahrwege, insbesondere entlang von Gassen, verlegt sein, und diese vorzugsweise entlang ihrer gesamten Länge mit Funksignalen ausreichender Stärke versorgen.

Die Leckwellenleiter können entlang sämtlicher Hauptfahrwege oder entlang eines Grossteils der Hauptfahrwege verlegt sein. Es kann daran gedacht sein, die Leckwellenleiter ausschliesslich entlang von Hauptfahrwegen zu verlegen, so dass beispielsweise quer zu den Hauptfahrwegen keine Leckwellenleiter verlaufen. Es kann aber auch daran gedacht sein, dass Leckwellenleiter sowohl entlang der Hauptfahrwege als auch entlang von Verbindungswegen oder entlang von anderen Strukturen im Regal, also auch beispielsweise quer zu den Hauptfahrwegen verlaufen.

Der Leckwellenleiter kann mit einem Zugangspunkt, verbunden sein, und von diesem mit einem als WLAN-Funksignal abzustrahlenden Signal versorgt werden. Ein solcher Zugangspunkt wird auch als "wireless access point" (WAP), Knoten oder Basisstation bezeichnet. Der Zugangspunkt kann das WLAN mit einem kabelgebundenen Datennetz, bspw. Ethernet, verbinden. Die Steuerungseinrichtung und etwaige nachstehend erwähnte Sensoren zur Erkennung geöffneter Türen und weitere Komponenten können über ein kabelgebundenes Datennetz miteinander und mit den Zugangspunkten kommunizieren. Die Zugangspunkte verknüpfen wiederum das WLAN und das vorbeschriebene kabelgebundene Datennetz.

Ist im Rahmen der vorliegenden Erfindung von einem Zugangspunkt die Rede, so ist vorzugsweise ein WAP mit zumindest einer, vorzugsweise aber mehreren Anschluss-Möglichkeiten für eine Antenne gemeint. Bevorzugt weist dieser WAP jedoch keine integrierte Antenne auf. Als Antenne dient dann, wie bereits beschrieben, der zumindest eine Leckwellenleiter.

Mehrere Leckwellenleiter können mittels eines HF-Verbindungskabels (Hochfrequenz-Verbindungskabels) verbunden sein, wobei nur einer dieser miteinander verbundenen Leckwellenleiter mit dem Zugangspunkt verbunden sein muss. Auf diese Weise müssen weniger Zugangspunkte angeschafft und installiert werden. Eine Verbindung zwischen dem Zugangspunkt und dem Leckwellenleiter kann ebenfalls mittels HF-Verbindungskabel hergestellt werden. Vorzugsweise können genau zwei Leckwellenleiter mittels eines HF-Verbindungskabels verbunden sein. Weiterhin kann angedacht sein, mehr als zwei Leckwellenleiter mittels HF-Verbindungskabeln miteinander zu verbinden.

Gemäss einem Ausführungsbeispiel kann das HF-Verbindungskabel ein Koaxialkabel sein.

Die Verbindung zwischen dem Leckwellenleiter und dem Zugangspunkt oder zwischen dem Leckwellenleiter und dem mit dem Zugangspunkt verbundenen HF-Verbindungskabel kann als Einspeisepunkt des Leckwellenleiters bezeichnet werden. Andernends kann der Leckwellenleiter mit einem Abschlusswiderstand, auch Endwiderstand genannt, versehen sein. Sind zwei Leckwellenleiter mittels HF-Verbindungskabel miteinander verbunden, so kann einer der beiden Leckwellenleiter den Einspeisepunkt und der andere den Endwiderstand aufweisen.

Die abzustrahlenden Signale werden von der Steuerungseinrichtung vorzugsweise an einen Zugangspunkt weitergegeben, und von dort über den als Antenne fungierenden Leckwellenleiter als Funksignale zu dem Shuttle geleitet.

Im Falle der bevorzugten bidirektionalen Kommunikation dient der Zugangspunkt zugleich dazu, Informationen, welche vom Shuttle gesendet werden, insbesondere über die Leckwellenleiter aufzunehmen und an die Steuerungseinrichtung weiterzuleiten.

Mehrere Zugangspunkte können, vorzugsweise mit weiteren Komponenten wie zumindest einem Switch, also einem Kopplungselement, und beispielsweise mit einem WLAN-Controller, als Netzwerk zusammengefasst werden. Sind, wie nachstehend näher beschrieben, mehrere Gruppen von Zugangspunkten vorhanden, so bildet jede dieser Gruppen, gegebenenfalls mit jeweils weiteren Komponenten, vorzugsweise jeweils ein solches Netzwerk.

Hierbei kann auch an Virtuelle Netzwerke (VLAN, Virtual Local Area Network) gedacht sein. Sind mehrere Netzwerke vorhanden, die als VLAN ausgeführt sind, so können sich diese Netzwerke Hardware-Komponenten wie beispielsweise Switches teilen. Sind mehrere Netzwerke vorhanden, so verfügt aber jedes Netzwerk vorzugsweise über seine eigenen Zugangspunkte, um eine nachstehend noch näher beschriebene Redundanz zu erreichen.

Der Leckwellenleiter kann dem Regal zugeordnet sein, indem er beispielsweise innerhalb des Regals angeordnet ist.

Der Leckwellenleiter kann mit Klemmen, beispielsweise Schraubklemmen oder Flanschklemmen, mit Schellen, Klammern, Clips oder dergleichen an einem Abschnitt des Regals befestigt werden. Die Befestigung kann, wenn entsprechende Klemmen oder dergleichen eingesetzt werden, werkzeuglos erfolgen.

Bei der Montage der Leckwellenleiter kann ein Rohrrichtgerät zum Einsatz kommen.

Die Leckwellenleiter können oberhalb der Fahrwege im oder am Regal angebracht sein. Dies ist insbesondere vorteilhaft, wenn die Fahrwege durchgehend, d.h. ohne Öffnungen oder Ausnehmungen, und nicht beispielsweise als teilweise offen ausgeführte Fahrschienen ausgeführt sind. Jedoch können auch bei nicht durchgehenden Fahrwegen, die beispielsweise als Fahrschienen ausgeführt sind, auch Abschirmungen und Reflexionen auftreten, so dass eine Montage der Leckwellenleiter oberhalb der Fahrwege, also oberhalb der Fahrschienen, sinnvoll sein kann.

Leckwellenleiter weisen üblicherweise eine bestimmte Abstrahlcharakteristik und eine Haupt-Abstrahlrichtung auf, und sollten daher ausgerichtet werden. Die Leckwellenleiter können derart oberhalb der Fahrwege montiert sein, dass die Haupt-Abstrahlrichtung nach unten zum Fahrweg zeigt. Sind mehrere Leckwellenleiter im Regal montiert, so können zumindest einige oder die Mehrzahl dieser Leckwellenleiter wie vorstehend beschrieben montiert sein.

Abhängig von den baulichen Gegebenheiten im Regal können jedoch auch einige oder sämtliche Leckwellenleiter so montiert sein, dass die Haupt-Abstrahlrichtung nach oben zeigt. Dies gilt insbesondere für eine oberste Ebene des Regals, oberhalb welcher oft keine Regalstrukturen zur Montage der Leckwellenleiter existieren.

Die vorstehend erwähnte Haupt-Abstrahlrichtung resultiert aus der Tatsache, dass die für Leckwellenleiter charakteristischen Ausnehmungen im Aussenleiter sich nicht über dessen gesamten Umfang erstrecken, die Funksignale also nur über einen Teil dieses Umfangs hinweg austreten.

Würde die Haupt-Abstrahlrichtung der vorstehend beschriebenen Leckwellenleiter nach oben zeigen, so müssten die Funksignale bei entsprechend ausgeführten Lagern zunächst die Fahrwege durchdringen, was eine Dämpfung der Funksignale bewirken würde.

Die Leckwellenleiter sind vorzugsweise derart montiert, dass sie nach der Montage keine Rotation durchführen können. Somit wird verhindert, dass sich die Haupt-Abstrahlrichtung unerwünschterweise nach der Montage ändert. Eine solche Rotation kann beispielsweise durch ein Anbringen von Kabelbindern verhindert werden.

Werden Leckwellenleiter verwendet, bei denen sich die vorgenannten Ausnehmungen über den gesamten Umfang erstrecken, und die Funksignale entsprechend eine radiale Abstrahlcharakteristik aufweisen, ergeben sich die vorstehend geschilderten Probleme nicht.

Werden Leckwellenleiter mit mehreren Haupt-Abstrahlrichtungen verwendet, welche durch die Anordnung von beispielsweise jeweils zwei Ausnehmungen auf derselben Höhe zwei Haupt-Abstrahlrichtungen aufweisen, so kann eine Ausrichtung und Montage in Anlehnung an die vorbeschriebenen Leckwellenleiter mit nur einer Haupt-Abstrahlrichtung erfolgen.

Dem Regal sind mehrere Leckwellenleiter zugeordnet, wobei eine erste Gruppe von Leckwellenleitern mit einer ersten Gruppe von Zugangspunkten verbunden ist, und wobei eine zweite Gruppe von Leckwellenleitern mit einer zweiten Gruppe von Zugangspunkten verbunden ist. Die erste Gruppe von Leckwellenleitern ist hierbei vorzugsweise Teil eines weiter oben beschriebenen ersten Netzwerks, welches ausserdem die erste Gruppe von Zugangspunkten und gegebenenfalls weitere Komponenten wie zumindest einen Switch, gegebenenfalls einen WLAN-Controller und dergleichen umfasst. Analoges gilt für die zweite Gruppe von Leckwellenleitern, welche entsprechend Teil eines zweiten Netzwerks ist.

Es kann daran gedacht sein, dass die erste Gruppe von Leckwellenleitern und die erste Gruppe von Zugangspunkten eingerichtet ist, so dass die erste Gruppe von Leckwellenleitern Funksignale eines ersten Frequenzbereichs abstrahlt, während die zweite Gruppe von Gruppe von Leckwellenleitern und die zweite Gruppe von Zugangspunkten eingerichtet ist, so dass die zweite Gruppe von Leckwellenleitern Funksignale eines zweiten Frequenzbereichs abstrahlt. Hierbei kann beispielsweise an die WLAN-Frequenzbereiche 2,4 GHz und 5 GHz gedacht sein.

Unabhängig davon, ob die Leckwellenleiter der beiden Gruppen Funksignale in demselben oder in verschiedenen Frequenzbereichen abstrahlen, gehören die erste Gruppe von Leckwellenleitern und die erste Gruppe von Zugangspunkten zu einem ersten Netzwerk und die zweite Gruppe von Leckwellenleitern und die zweite Gruppe von Zugangspunkten zu einem zweiten Netzwerk.

Es kann also auch daran gedacht sein, dass beide Gruppen eingerichtet sind, Funksignale in demselben Frequenzbereich abzustrahlen.

Die Leckwellenleiter können hierbei jeweils abhängig vom abzustrahlenden Frequenzbereich beschaffen sein. Im Markt sind Leckwellenleiter erhältlich, welche für bestimmte Frequenzbereich optimiert sind. Beispielsweise können im Rahmen der vorliegenden Erfindung Leckwellenleiter zum Einsatz kommen, welche auf den 5 GHz-Frequenzbereich optimiert sind, und/oder solche Leckwellenleiter, welche auf den 2,4 GHz-Frequenzbereich optimiert sind.

Beide Gruppen umfassen jeweils zumindest einen, vorzugsweise eine Vielzahl von Leckwellenleitern.

Als Frequenzbereiche kommen vorzugsweise die von üblichen WLAN genutzten Frequenzbereiche in Frage. Diese liegen üblicherweise zwischen 1 GHz und 7 GHz, insbesondere bei 2,4 GHz, 5 GHz oder künftig auch bei 6 GHz. Die Frequenzbereiche 2,4 GHz und 5 GHz sind hierbei besonders bevorzugt. Dies gilt unabhängig davon, ob die Leckwellenleiter beider Gruppen in denselben oder in verschiedenen Frequenzbereichen arbeiten Vorzugsweise ist an genau zwei Gruppen von Leckwellenleitern gedacht, wobei jede Gruppe Funksignale in genau einem Frequenzbereich abstrahlt und empfängt. Wie bereits beschrieben kann es sich hierbei um denselben oder um verschiedene Frequenzbereiche handeln.

Alternativ kann aber auch daran gedacht sein, mehr als zwei Gruppen von Leckwellenleitern einzusetzen, wobei jede Gruppe Funksignale in genau einem Frequenzbereich abstrahlt und empfängt. Beim Einsatz von drei Gruppen von Leckwellenleitern ergibt sich somit eine doppelte Redundanz, weil selbst beim Verbindungsabbruch zu den Leckwellenleitern von zwei der drei Gruppen noch eine Verbindung zwischen dem Shuttle und einem Leckwellenleiter der dritten Gruppe besteht. Ob der Einsatz von drei oder mehr Gruppen von Leckwellenleitern sinnvoll ist, hängt von den Gegebenheiten und Bedingungen des betrachteten Shuttle-Systems ab. Oft ist der Einsatz von genau zwei Gruppen von Leckwellenleitern optimal, weil eine einfache Redundanz, welche nachstehend näher beschrieben ist, bereits eine weitgehend unterbrechungsfreie Signalversorgung des Shuttles sicherstellt; weil bei zwei Gruppen von Leckwellenleitern die Montage, inkl. Verkabelung, und der Betrieb einfacher ist; und weil bei mehr als zwei Gruppen von Leckwellenleitern abhängig von deren Montage die Abstände möglicherweise Leckwellenleiter verschiedener Gruppen unmittelbar nebeneinander, d.h. entlang desselben Hauptfahrwegs montiert werden müssen, um sicherzustellen, dass das Shuttle stets Funksignale aller drei (oder mehr) Gruppen von Leckwellenleitern empfängt.

Das Shuttle-System umfasst eine Anzahl von m Leckwellenleitern und maximal m Zugangspunkten, welche jeweils die erste Gruppe von Leckwellenleitern und Zugangspunkten bilden und Teil eines ersten Netzwerks sind, und wobei die m Leckwellenleiter zur Abstrahlung von Funksignalen des ersten Netzwerks mit den maximal m Zugangspunkten verbunden sind, welche die m Leckwellenleiter mit den abzustrahlenden Funksignalen versorgen. Ferner umfasst das Shuttle-System eine Anzahl von n Leckwellenleitern und maximal n Zugangspunkten, welche jeweils die zweite Gruppe von Leckwellenleitern und Zugangspunkten bilden und Teil eines zweiten Netzwerks sind, und wobei die n Leckwellenleiter zur Abstrahlung von Funksignalen des zweiten Netzwerks mit maximal n Zugangspunkten verbunden sind. Wie vorstehend bereits beschrieben, können die Frequenzbereiche, innerhalb welcher die Leckwellenleiter die über die Netzwerke transportierten Signale als Funksignale abstrahlen, in demselben Frequenzbereich oder in verschiedenen Frequenzbereichen liegen.

Konkret kann also daran gedacht sein, dass die Funksignale des ersten Netzwerks, welche von den m Leckwellenleitern der ersten Gruppe abgestrahlt werden, in einem ersten Frequenzbereich, beispielsweise 5 GHz, liegen, und dass die Funksignale des zweiten Netzwerks, welche von den n Leckwellenleitern der zweiten Gruppe abgestrahlt werden, in einem zweiten Frequenzbereich, beispielsweise 2,4 GHz, liegen.

Verwenden die Leckwellenleiter der beiden Netzwerke verschiedene Frequenzbereiche, so können negative gegenseitige Beeinflussung der Funksignale aus beiden Netzwerken vermieden werden. Dies gilt insbesondere, wenn die Leckwellenleiter so angeordnet sind, wie dies nachstehend in Bezug auf eine orthogonal zu den Leckwellenleitern oder den Hauptfahrwegen liegende Querschnittsebene erläutert ist.

Unabhängig von einer Auswahl der Frequenzbereiche ist vorzugsweise jeder Leckwellenleiter mit genau einem Zugangspunkt verbunden. Jeder Zugangspunkt kann mit einem oder mehreren Leckwellenleitern verbunden sein.

Zumindest ein Teil, d.h. einige der Leckwellenleiter und/oder Abschnitte der Leckwellenleiter, können entlang eines Hauptfahrwegs des Shuttles verlaufen. Es kann auch daran gedacht sein, dass sämtliche Leckwellenleiter vollständig entlang der Hauptfahrwege verlaufen. Ferner kann daran gedacht sein, dass zumindest ein Abschnitt sämtlicher Leckwellenleiter entlang der Hauptfahrwege verläuft.

Ein Teil der Leckwellenleiter verlaufen entlang eines Hauptfahrwegs des Shuttles, so sind in einer orthogonal zu diesem Hauptfahrweg verlaufenden Querschnittsebene die Leckwellenleiter beider Gruppen derart alternierend angeordnet, dass die unmittelbaren Nachbarn eines zur ersten Gruppe gehörenden Leckwellenleiters ausschliesslich Leckwellenleiter der zweiten Gruppe sind. Hierbei sind vorzugsweise die unmittelbaren Nachbarn in horizontaler und/oder vertikaler Richtung gemeint, und vorzugsweise nicht die Nachbarn in diagonaler Richtung, selbst wenn diese näher an einem betrachteten Leckwellenleiter angeordnet sind, als die nächstliegenden Nachbarn in horizontaler und vertikaler Richtung.

Verlaufen die Leckwellenleiter nicht entlang der Hauptfahrwege, so können die vorstehenden Überlegungen für eine Querschnittsebene gelten, welche orthogonal zu einer Längsrichtung der Leckwellenleiter verläuft. Vorzugsweise verlaufen die Leckwellenleiter hierbei im Wesentlichen parallel zueinander. Insbesondere bei Ebenen-gebundenen Shuttle-Systemen kann es genügen, wenn die unmittelbaren Nachbarn eines zur ersten Gruppe gehörenden Leckwellenleiters in horizontaler Richtung Leckwellenleiter der zweiten Gruppe sind.

Insbesondere bei Gassen-gebundenen Shuttle-Systemen kann es genügen, wenn die unmittelbaren Nachbarn eines zur ersten Gruppe gehörenden Leckwellenleiters in vertikaler Richtung Leckwellenleiter der zweiten Gruppe sind.

Vorzugsweise gehören jedoch die unmittelbaren Nachbarn eines zur ersten Gruppe gehörenden Leckwellenleiters in vertikaler und horizontaler Richtung zu der zweiten Gruppe. Vorteilhaft an einer solchen Ausführung ist auch, dass der Abstand zwischen Leckwellenleitern derselben Gruppe erhöht wird, was etwaige gegenseitige Beeinflussungen von Funksignalen desselben Frequenzbereichs, beispielsweise in Form von Interferenzen, weniger wahrscheinlich macht. Dies gilt unabhängig davon, ob es sich beispielsweise um ein Ebenen-gebundenes, ein Gassen-gebundenes oder ein ungebundenes Shuttle-System handelt.

Die Leckwellenleiter können innerhalb des Regals so angeordnet sein, dass die von Leckwellenleitern derselben Gruppe abgestrahlten Funksignale desselben Netzwerks möglichst geringe Überlappungen aufweisen; wobei gleichzeitig die Funksignale von Leckwellenleitern unterschiedlicher Gruppen, welche Funksignale in unterschiedlichen Frequenzbereichen abstrahlen, sich möglichst stark überlappen. So wird das Auftreten von Interferenzen möglichst gering gehalten und zugleich eine möglichst unterbrechungsfreie Signalversorgung durch Funksignale von zumindest einem, vorzugsweise jedoch beiden Netzwerken überall im Regal sichergestellt.

Die Häufigkeit bzw. das Risiko von Interferenzen kann weiter reduziert werden, wenn die Funksignale beider Netzwerke in unterschiedlichen Kanäle desselben Frequenzbereichs oder sogar in unterschiedlichen Frequenzbereichen liegen.

Insbesondere um Interferenzen zu vermeiden und die Kosten für Anschaffung und Montage der Leckwellenleiter gering zu halten, d.h. nur so viele Leckwellenleiter einzubauen, dass eine weitgehend unterbrechungsfreie Signalversorgung gewährleistet ist, können zusätzlich zu den vorstehend bereits ausführlich beschriebenen Details zum Verlauf der Leckwellenleiter die nachfolgenden Details berücksichtigt werden.

Entlang eines Fahrwegs, insbesondere entlang eines Hauptfahrwegs, verläuft vorzugsweise jeweils nur ein einziger Leckwellenleiter. Insbesondere verläuft innerhalb jedes Abschnitts eines Fahrwegs über dessen gesamte Länge jeweils nur ein einziger Leckwellenleiter.

Kreuzen sich die Fahrwege eines Lagers, so verläuft entlang eines Fahrwegs zwischen zwei Kreuzungen vorzugsweise nur ein einziger Leckwellenleiter. Abhängig von der Länge der mit Funksignalen zu versorgenden Fahrwege kann auch ein einziger Leckwellenleiter mehrere Fahrwege versorgen. Diese Fahrwege können hintereinander angeordnet oder durch Kreuzungen miteinander verbunden sein.

Richtungsänderungen des Leckwellenleiters sind möglich, dieser muss also nicht zwingend ausschliesslich entlang einer einzigen Geraden verlegt werden. Etwaige einzuhaltende Biegeradien etc. sind hierbei zu berücksichtigen.

Vorzugsweise wird jeder Leckwellenleiter jedoch entlang jeweils einer einzigen Geraden verlegt. Etwaige Richtungsänderungen werden durch Verbindung zweier Leckwellenleiter, welche jeweils entlang einer Geraden verlegt sind, durch HF-Verbindungskabel erzeugt.

Es kann daran gedacht sein, sämtliche Leckwellenleiter im Regal parallel zueinander anzuordnen. Dies kann beispielsweise dadurch geschehen, dass die Leckwellenleiter entlang parallel zueinander verlaufender Hauptfahrwege angeordnet sind. Weiterhin kann angedacht sein, zumindest sämtliche entlang von parallel zueinander verlaufenden Hauptfahrwegen verlegte Leckwellenleiter parallel zueinander anzuordnen. Zusätzliche Leckwellenleiter, welche entlang von Neben-Fahrwegen verlaufen, müssen in diesem Ausführungsbeispiel nicht parallel zu den Hauptfahrwegen angeordnet sein.

Vorzugsweise weisen die Leckwellenleiter genau zwei Enden auf, welche entweder mit einem Endwiderstand, einem HF-Verbindungskabel oder unmittelbar mit einem Zugangspunkt verbunden sind.

Die Signalstärke der von einem Leckwellenleiter abgegebenen Funksignale nimmt mit zunehmender Entfernung vom Zugangspunkt, an dem der Leckwellenleiter angeschlossen ist, ab. Daher kann es bei langen Fahrwegen nötig sein, mehrere Leckwellenleiter hintereinander entlang eines einzigen Fahrwegs anzuordnen.

Mehrere hintereinander angeordnete Leckwellenleiter können beispielsweise von demselben Zugangspunkt mit den abzustrahlenden Signalen versorgt werden. Ist dieser Zugangspunkt am Anfang oder Ende des zu versorgenden Fahrwegs angeordnet, so können zwei oder mehr Leckwellenleiter hintereinander, d.h. im Wesentlichen entlang derselben Geraden, angeordnet sein. Der unmittelbar an den Zugangspunkt angrenzende Leckwellenleiter kann direkt, beispielsweise über ein kurzes HF-Verbindungskabel, mit diesem verbunden sein, während der weiter vom Zugangspunkt entfernte Leckwellenleiter über ein entsprechend längeres HF-Verbindungskabel mit dem Zugangspunkt verbunden sein kann. Da das Signal im HF-Verbindungskabel deutlich weniger gedämpft wird, als im Leckwellenleiter, kann der weiter vom Zugangspunkt entfernte Leckwellenleiter auf diese Weise mit einem Signal ausreichender Stärke versorgt werden.

Weitere Konstellationen hintereinander angeordneter Leckwellenleiter sind denkbar. Beispielsweise kann am Anfang und Ende eines Fahrwegs jeweils ein Zugangspunkt angeordnet sein. Diese Zugangspunkte können unmittelbar, beispielsweise über jeweils ein kurzes HF-Verbindungskabel, mit dem jeweils nächstliegenden von insgesamt zwei in diesem Fahrweg verlegten Leckwellenleiter verbunden sein.

Die vorbeschriebene Signaldämpfung ist nicht nur von der Entfernung zum Zugangspunkt abhängig, sondern auch vom Frequenzbereich. Hierbei gilt, dass die Weg-abhängige Signaldämpfung bei höheren Frequenzen stärker ausgeprägt ist. Je nach Bauart des Lagers, d.h. abhängig von der Materialauswahl, den Shuttles, den zu transportierenden Fördergütern und im Allgemeinen etwaiger Signalabschirmungen innerhalb des Lagers können für den 2,4 GHz-Frequenzbereich Leckwellenleiter mit ungefähr 120 Metern Länge über ihre gesamte Länge hinweg ein ausreichend starkes Signal abgeben Bei Verwendung längerer Leckwellenleiter kann die Signaldämpfung zu hoch, d.h. die Signalstärke zu schwach sein. Für den 5 GHz-Bereich können Leckwellenleiter mit ungefähr bis zu 80 Metern Länge Funksignale mit ausreichender Signalstärke abstrahlen.

Besonders vorteilhaft im Vergleich zu bislang im Stand der Technik verwendeten WLAN-Antennen können die Leckwellenleiter angesichts der Kosten für Anschaffung und Montage sein, wenn die Länge der mit Funksignalen zu versorgenden Fahrwege, bspw. Hauptfahrwege, über 20 Metern oder über 30 Metern oder über 40 Metern liegt. Weiterhin sind die Leckwellenleiter unabhängig von der Länge der zu versorgenden Fahrwege dann besonders vorteilhaft, wenn starke Abschirmungen der Signale entlang dieser Fahrwege auftreten oder zu erwarten sind. Dies hängt von der Bauart des Regals, insbesondere der Fahrwege ab.

Hintereinander, insbesondere entlang eines Fahrwegs, angeordnete Leckwellenleiter können mit demselben Zugangspunkt verbunden sein. Diese Leckwellenleiter können untereinander mit HF-Verbindungskabeln verbunden sein. Sind hintereinander angeordnete Leckwellenleiter entlang eines Fahrwegs mit unterschiedlichen Zugangspunkten verbunden, was auf Grund baulicher Bedingungen eines Lagers unter Umständen nötig sein kann, so findet ein nachstehend näher beschriebener Funkzellenwechsel statt, während sich ein Shuttle entlang dieses Fahrwegs bewegt.

Ein solcher Funkzellenwechsel wird teilweise auch als Roaming, beim Einsatz von WLAN auch als WLAN-Roaming bezeichnet. Technisch handelt es sich hierbei jedoch um ein sogenanntes "Handover", also einem Wechsel der Basisstation.

Entspricht die Länge der Leckwellenleiter der Länge der Hauptfahrwege, entlang derer sie verlegt sind, so sind die Shuttles während einer Fahrt entlang eines bestimmten Hauptfahrwegs dauerhaft mit demselben Zugangspunkt verbunden. Auf diese Weise werden etwaige Funkzellenwechsel, welche nachstehend näher beschrieben sind, möglichst selten nötig. Insbesondere werden derartige Funkzellenwechsel vorzugsweise nur bei Bewegungen der Shuttles orthogonal zu den Hauptfahrtrichtungen oder bei einem, beispielsweise mit Hilfe von Shuttle-Liften durchgeführten, Ebenen-Wechsel nötig.

Wie bereits beschrieben umfasst das Shuttle vorzugsweise eine Antenne, welche optional als Richtantenne ausgeführt sein kann. Vorzugsweise umfasst das Shuttle zumindest zwei Antennen. Ist das Shuttle im Wesentlichen quaderförmig ausgebildet, wie dies bei den von der Anmelderin unter der Bezeichnung StoreBiter^{®} OLPS vertriebenen Shuttles der Fall ist, so bietet es sich an, die Antenne oder Antennen auf einer der sechs Seiten oder zumindest nahe einer dieser Seiten, beispielsweise unmittelbar unterhalb eines äusseren Gehäuses des Shuttles, anzubringen. Dies gilt auch, wenn das Shuttle zwei oder mehr Antennen aufweist. Ist die zumindest eine Antenne auf dem Gehäuse des Shuttles montiert, so erfolgt ihre Montage vorzugsweise derart, dass sie im Betrieb möglichst gut vor Kollisionen geschützt ist und nicht mit dem Fördergut in Kontakt tritt. Ferner sollte die Montage auch so erfolgen, dass die Antenne bei unerwünschten Berührungen oder Kollisionen zwischen dem Shuttle und Bestandteilen des Regals, etwaigen Vertikalförderern oder anderen Bestandteilen des Shuttle-Systems möglichst keinen Schaden nimmt.

Sind mehr als zwei Antennen vorhanden, so kann daran gedacht sein, jede dieser Antennen mit einem separaten WLAN-Client zu verbinden. Mit Hilfe dieser Antennen kann das Shuttle gleichzeitig verschiedene Funksignale, beispielsweise Funksignale verschiedener Frequenzbereiche empfangen. Es kann auch daran gedacht sein, einen einzigen WLAN-Client oder im Allgemeinen ein einziges Funkmodul einzusetzen, welches mit mehreren Antennen verbunden und geeignet ist, gleichzeitig oder im Wesentlichen gleichzeitig verschiedene Funksignale, beispielsweise Funksignale verschiedener Frequenzbereiche, zu empfangen. Auf diese Weise wird eine vorteilhafte Redundanz erreicht, da das Shuttle auch dann unterbrechungsfrei mit der Steuerungseinrichtung kommunizieren kann, wenn es eines von zumindest zwei Funksignalen empfängt. Die vorbeschriebenen unterschiedlichen Funksignale gehen vorzugsweise von unterschiedlichen Netzwerken aus. Es kann daran gedacht sein, dass beide Netzwerke Funksignale desselben Frequenzbereichs nutzen. Es kann aber auch daran gedacht sein, dass die Netzwerke Funksignale unterschiedlicher Frequenzbereiche nutzen.

Wie nachstehend im Hinblick auf die Redundanz noch näher erläutert ist, sind die Informationen, also die gleichzeitig mittels der Funksignale übertragenen Daten, Befehle, etc., in beiden Netzwerken vorzugsweise identisch, weil beispielsweise Befehle vor dem Versenden dupliziert werden. Ein an das Shuttle zu übermittelnder Befehl wird also vorzugweise dupliziert und parallel über das erste und das zweite Netzwerk an das Shuttle übertragen.

Die hierbei genutzten Frequenzbereiche können zwischen 1 GHz und 7 GHz liegen. Vorzugsweise kann es sich um die WLAN-typischen Frequenzbereiche 2,4 GHz und 5 GHz handeln. Wie bereits beschrieben können die zwei Netzwerke denselben oder unterschiedliche Frequenzbereiche nutzen.

Hierbei sei darauf hingewiesen, dass vorzugsweise genau zwei Netzwerke zum Einsatz kommen. Es kann jedoch auch daran gedacht sein, mehr als zwei Netzwerke einzusetzen.

Unabhängig von Anzahl, Art und Ausrichtung der Antennen kann daran gedacht sein, Breitbandantennen im Shuttle einzusetzen. Unter einer Breitbandantenne wird hierbei vorzugsweise eine Antenne verstanden, welche jedenfalls geeignet ist, Funksignale mit einer Frequenz zwischen 1 GHz und 7 GHz zu empfangen. Besonders bevorzugt sind Antennen, welche geeignet sind, die WLAN-Frequenzbereiche 2,4 GHz und 5 GHz zu empfangen. Solche Antennen werden teilweise auch als Dual-Band-Antennen bezeichnet, insbesondere, wenn sie die WLAN-Frequenzbereiche 2,4 GHz und 5 GHz empfangen können.

Wie vorstehend bereits erwähnt kann das Shuttle zumindest zwei Antennen umfassen, um die Funksignale der beiden Netzwerke zu empfangen. Um eine weitere Redundanz zu erreichen, können jeweils zwei oder mehr Antennen zum Empfang der Funksignale desselben Netzwerks zum Einsatz kommen. Beispielsweise kann daran gedacht sein, das Shuttle mit vier oder sechs Antennen auszustatten, wobei jeweils zwei oder drei Antennen zu einer Gruppe zusammengefasst und eingerichtet sind, Funksignale desselben Netzwerks zu empfangen. Wie vorstehend bereits erwähnt, können die Funksignale der Netzwerke in demselben oder in verschiedenen Frequenzbereichen liegen.

Das Shuttle kann vorzugsweise zwei, drei, vier, fünf, sechs oder mehr als sechs Antennen aufweisen. Diese können wie vorstehend beschrieben zu Gruppen zusammengefasst sein, wobei jede Gruppe einem der beiden Netzwerke, und somit auch einer der entsprechenden Gruppen von Zugangspunkten etc., zugeordnet sein kann.

Bei den Antennen kann es sich beispielsweise um Sektor-Antennen, Richtantennen, Rundstrahlantennen oder gedruckte Antennen handeln. Bei sämtlichen vorgenannten Antennen kann es sich um Breitbandantennen handeln.

Die Antennen können verteilt auf dem Shuttle angeordnet sein, so dass selbst bei Beladung des Shuttles mit einem stark abschirmenden Fördergut zumindest eine der Antennen Funksignale senden und empfangen kann.

Kommen Breitbandantennen zum Einsatz, so können diese zum Empfangen der vorgenannten Funksignale der zwei Netzwerke entsprechend mit genau einem oder mit jeweils einem WLAN-Client verbunden sein.

Sofern das Shuttle zumindest zwei Antennen aufweist, kann bei Ausführungsbeispielen der vorliegenden Antennen daran gedacht sein, eine Mehrantennentechnik, vorzugsweise MIMO (Multiple Input Multiple Output) zu verwenden. Gemäss MIMO ist vorgesehen, mehrere Sende- und Empfangsantennen zu verwenden, um in jedem Kanal mehrere Signalströme übertragen zu können. Es kann auch daran gedacht sein, MU-MIMO, Multi-User-MIMO, zu verwenden; wobei mehrere Antennen mit unterschiedlichen WLAN-Clients kommunizieren.

Es kann aber auch daran gedacht sein, die Antennentechnik SIMO (Single Input Multiple Output) zu verwenden, bei welcher auf Seiten der Sender, hier der Zugangspunkte im Regal, jeweils nur eine Antenne, d.h. Leckwellenleiter, pro Zugangspunkt vorliegt.

Hinsichtlich der Antennentechnik sind weitere Varianten möglich.

Neben dem vorbeschriebenen System umfasst die vorliegende Erfindung weiterhin das nachstehend beschriebene Verfahren. Einzelheiten und Merkmale, welche vorstehend mit Hinblick auf das System beschrieben wurden, gelten analog auch für das nachstehend beschriebene Verfahren und umgekehrt.

Ein Verfahren zum Betreiben eines Shuttle-Systems nach Anspruch 4 umfasst folgenden Schritt:
- Übertragen eines Funksignals von der Steuerungseinrichtung über den Leckwellenleiter auf das Shuttle.

Hierbei kann eine Funkverbindung zwischen dem Shuttle und dem Zugangspunkt, welcher mit dem Leckwellenleiter verbunden ist, aufgebaut und aufrechterhalten werden. Wie in Bezug auf das erfindungsgemässe Verfahren weiter unten beschrieben, können über eine aufrechterhaltene Verbindung beispielsweise safe-Daten übertragen werden, was die Sicherheit im Shuttle-System erhöht.

Die Verwendung von Leckwellenleitern zur Übertragung von Funksignalen an Shuttles in Shuttle-Systemen bewirkt gegenüber den bislang benutzten Antennen zur Übertragung dieser Signale deutlich bessere Signaleigenschaften, insbesondere eine höhere Signalstärke. Ist der Leckwellenleiter entlang des Fahrwegs verlegt, so stellen etwaige Signalabschirmungen durch das Fördergut, Einbauten am Regal oder Bestandteile des Regals im Vergleich zum Stand der Technik keine wesentlichen Probleme dar

Das Funksignal ist vorzugsweise ein WLAN-Funksignal. Die Steuerungseinrichtung kann Befehle in Form von Funksignalen an das Shuttle senden. Die Funkverbindung kann unidirektional sein, vorzugsweise handelt es sich jedoch um eine bidirektionale Verbindung. Werden die Funksignale und die Funkverbindungen im Rahmen der vorliegenden Erfindung als unidirektional beschrieben, also beispielsweise im Hinblick auf die Leckwellenleiter nur von einem Abstrahlen der Funksignale die Rede ist, so soll einem weiteren Ausführungsbeispiel gemäss stets auch die bevorzugte bidirektionale Funkverbindung, d.h. auch ein Empfangen entsprechender Funksignale, gemeint sein.

Die Funkverbindung kann aufrechterhalten werden, so lange das Shuttle im Regal tätig ist. Allerdings sind Verbindungsabbrüche wegen SignalAbschirmungen nie auszuschliessen. Ein Aufrechterhalten der Funkverbindung umfasst im Rahmen der vorliegenden Erfindung daher auch ein Aufrechterhalten über einen gewissen Zeitraum hinweg. Diese Funkverbindung kann aus verschiedenen Gründen, beispielsweise auch wegen eines nachstehend noch beschriebenen Funkzellenwechsels, unterbrochen oder beendet werden. Wie nachstehend im Detail beschrieben sorgen die Ausführungsvarianten des erfindungsgemässen Verfahrens jedoch für eine in der Regel unterbrechungsfreie Signalversorgung.

Das Shuttle-System kann einen ersten und einen zweiten Hauptfahrweg umfassen, welche durch einen Lagerkanal miteinander verbunden sind. Hierbei kann daran gedacht sein, dass ein unbeladenes Shuttle diesen Lagerkanal nutzt, um von dem ersten Hauptfahrweg in den zweiten Hauptfahrweg zu gelangen. Unbeladene Shuttles können die Lagerkanäle, sofern diese zumindest für die Shuttles nicht als Sackgasse ausgebildet sind, als Verbindungswege zwischen den Hauptfahrwegen, beispielsweise auch für einen Gassenwechsel, nutzen. Dies gilt auch dann, wenn in den Lagerkanälen zumindest ein Fördergut eingelagert ist, weil die unbeladenen Shuttles unter den Fördergütern hindurchfahren können. Die Leckwellenleiter können eine unterbrechungsfreie Signalversorgung auch dann gewährleisten, wenn in den Lagerkanälen Fördergüter auf den Lagerplätzen eingelagert wurden. Hierfür kann es genügen, wenn die Leckwellenleiter ausschliesslich entlang der Hauptfahrwege und somit orthogonal zu den Lagerkanälen verlaufen. Die Signalstärke der Leckwellenleiter ist üblicherweise selbst bei mehrfachtiefen Lagerkanälen noch ausreichend gross, um Signalabbrüche innerhalb der Lagerkanäle zu vermeiden.

Alternativ kann auch daran gedacht sein, innerhalb der Lagerkanäle auch Leckwellenleiter zu verlegen. Diese Leckwellenleiter können entlang der gesamten Länge der Lagerkanäle oder nur über einen Abschnitt der Lagerkanäle hinweg verlaufen.

In jedem Fall ermöglichen die Leckwellenleiter ein sicheres Durchqueren besetzter Lagerkanäle, da die unter den Fördergütern im Lagerkanal hindurchfahrenden Shuttles keinen Abbruch der Signalversorgung erleiden.

Durchgehende, d.h. nicht als Sackgasse ausgebildete Lagerkanäle, in welchen keine Fördergüter eingelagert sind, können auch von Shuttles, die ein

Fördergut transportieren, als Verbindung zwischen Hauptfahrwegen genutzt werden.

Das Verfahren kann zum Betreiben eines Shuttle-Systems eingesetzt werden, welches zumindest zwei Gruppen von Leckwellenleitern umfasst, welche Funksignale verschiedener Netzwerke abstrahlen.

Das Verfahren umfasst den folgenden Schritt:
- im Wesentlichen gleichzeitige Übertragung von Funksignalen des ersten und des zweiten Netzwerks von den entsprechenden Leckwellenleitern auf das Shuttle, wobei jeweils eine Funkverbindung zwischen dem Shuttle und dem jeweiligen Netzwerk aufgebaut und aufrechterhalten wird.

Die Funksignale beider Netzwerke können in demselben oder in verschiedenen Frequenzbereichen liegen. Insbesondere kann hierbei an die Frequenzbereiche von 2,4 GHz und 5 GHz gedacht sein.

Insbesondere, wenn es sich um WLAN-Frequenzbereiche handelt, sind diese üblicherweise in mehrere Kanäle unterteilt. Verwenden die Netzwerke bzw. die Zugangspunkte und Leckwellenleiter der Netzwerke denselben Frequenzbereich, so kann daran gedacht sein, dass die Netzwerke verschiedene Kanäle innerhalb dieses identischen Frequenzbereichs verwenden. Auf diese Weise können Interferenzen vermieden werden.

Es kann aber auch daran gedacht sein, denselben Kanal zu verwenden. Interferenzen treten nicht in allen Fällen auf und führen auch nicht in allen Fällen zu einer Störung des Betriebs.

Im Allgemeinen kann es, beispielsweise bauartbedingt, Ausführungsbeispiele von Shuttle-Systemen geben, bei denen die Vermeidung von Interferenzen wichtig ist, um Störungen zu vermeiden. Interferenzen können dann vermieden werden, in dem die Netzwerke verschiedene Kanäle desselben Frequenzbereichs oder verschiedene Frequenzbereiche nutzen. Es kann aber auch Ausführungsbeispiele geben, bei welchen die Verwendung desselben Frequenzbereichs und sogar desselben Kanals nicht zu Interferenz-bedingten Störungen führt.

Das Verfahren kann einen Funkzellenwechsel mit folgenden Schritten umfassen:
- Ermitteln zumindest einer Signaleigenschaft der Funksignale innerhalb beider Netzwerke
- Feststellen, ob innerhalb eines der beiden Netzwerke Funksignale mit zumindest einer besseren Signaleigenschaft empfangbar sind, welche von einem Zugangspunkt ausgehen, zu dem momentan keine Funkverbindung besteht, sowie,
- falls solche Funksignale mit besserer Signalqualität empfangbar sind, Durchführung eines Funkzellenwechsels durch Aufbau einer Funkverbindung zu dem betreffenden Zugangspunkt und Beendigung der vormals bestehenden Funkverbindung,
- wobei während dieses Funkzellenwechsels die Funkverbindung im anderen Netzwerk ohne Durchführung eines Funkzellenwechsels aufrechterhalten wird.

Ein Feststellen, ob Funksignale mit einer besseren Signaleigenschaft empfangbar sind, wird insbesondere im Zusammenhang mit Teilnehmern eines WLAN auch Scannen genannt.

Eine Funkzelle ist vorzugsweise der räumliche Bereich, welcher von genau einem Zugangspunkt mit Hilfe von einem oder mehreren Leckwellenleitern, die mit diesem Zugangspunkt verbunden sind, mit Funksignalen versorgt wird.

Ein Funkzellenwechsel umfasst vorzugsweise einen Abbruch einer Verbindung zu einer ersten Funkzelle und den Aufbau einer Verbindung zu einer anderen Funkzelle, wobei die Funksignale der ersten und der zweiten Funkzelle zu demselben Netzwerk gehören.

Die zu ermittelnde Signaleigenschaft des Funksignals kann beispielsweise eine Signalstärke, ein Signal-Rauschen-Verhältnis, oder dergleichen sein. Auch eine Kombination mehrere Signaleigenschaften kann als Auslöser für einen Funkzellenwechsel herangezogen werden.

Der Funkzellenwechsel findet vorzugsweise jeweils nur bezüglich der Funksignale eines der beiden Netzwerke statt. Vorzugsweise wird während der gesamten Dauer des Funkzellenwechsels betreffend eines der beiden Netzwerke die Funkverbindung im anderen Netzwerk aufrechterhalten. Dies kann durch entsprechende Einstellung oder Konfiguration des Shuttles und/oder der Steuerungseinrichtung, bspw. des Lagerverwaltungssystems, gewährleistet werden. Insbesondere kann der WLAN-Client des Shuttles entsprechend eingestellt sein. Im Falle mehrerer WLAN-Clients pro Shuttle gilt dies für alle WLAN-Clients des betreffenden Shuttles.

Der Funkzellenwechsel innerhalb eines Netzwerks wird hierbei vorzugsweise nur dann durchgeführt, wenn im anderen Netzwerk eine Funkverbindung besteht. Bricht die Funkverbindung in einem der Netzwerke ab, so kann daran gedacht sein, einen Funkzellenwechsel frühestens dann durchzuführen, wenn in beiden Netzwerken wieder Funkverbindungen bestehen. Im Allgemeinen kann also daran gedacht sein, dass Funkzellenwechsel nur unter der Voraussetzung durchgeführt werden, dass in beiden Netzwerken eine Funkverbindung besteht.

Dieser Funkzellenwechsel kann stattfinden, wenn die Signalstärke der empfangenen Funksignale bei der bestehenden Funkverbindung zwischen dem Shuttle und einem Leckwellenleiter und somit dem zugehörigen Zugangspunkt innerhalb eines der beiden Netzwerke geringer ist, als die Signalstärke von ebenfalls empfangbaren Funksignalen eines anderen Leckwellenleiters und des zugehörigen Zugangspunkts aus demselben Netzwerk, zu denen momentan keine Funkverbindung besteht. Analoges gilt, wenn anstelle oder zusätzlich zur Signalstärke das Signal-Rauschen-Verhältnis oder eine andere Signaleigenschaft herangezogen wird, um den Funkzellenwechsel auszulösen, wobei dann diese Signaleigenschaft verglichen wird.

Bei dem Funkzellenwechsel kommt vorzugsweise ein als Soft-Roaming bezeichnetes Verfahren zur Anwendung. Hierbei führt das Shuttle den Funkzellenwechsel zur Funkzelle eines Zugangspunkts wie vorstehend beschrieben dann durch, wenn die betreffende Signaleigenschaft, insbesondere die Signalstärke, besser ist, als die Signalstärke der Funkzelle, zu welcher momentan eine Funkverbindung besteht. Alternativ aber weniger bevorzugt kann ein Hard-Roaming durchgeführt werden, bei welchem der Funkzellenwechsel erst stattfindet, wenn die Funkverbindung zur bestehenden Funkzelle abbricht. Durch das vorbeschriebene Soft-Roaming werden Verbindungsabbrüche zuverlässig vermieden.

Üblicherweise muss für das Scannen, beispielsweise in Vorbereitung eines Soft-Roamings, die Funkverbindung zu dem betreffenden Zugangspunkt und somit zu dem betreffenden Netzwerk kurzzeitig unterbrochen werden. Es kann daran gedacht sein, dass ein Scannen nur dann erfolgt, wenn zu beiden Netzwerken eine Funkverbindung besteht. Auf diese Weise kann sichergestellt werden, dass das Shuttle auch während des Scannens in einem Netzwerk über das andere Netzwerk Befehle bzw. im Allgemeinen Funksignale empfangen kann.

Ein Hard-Roaming kann angedacht sein, wenn häufige Funkzellenwechsel zu vermeiden sind. Ferner kann an ein Hard-Roaming gedacht sein, wenn bei dem betreffenden Shuttle-System, ggf. aus Erfahrung im laufenden Betrieb oder auf Grund der Bauweise, zu erwarten ist, dass bei einer Bewegung des Shuttles über eine gewisse Strecke hinweg die Signalstärke eines Funksignals einer Funkzelle zunächst schlechter, aber dann wieder besser wird. Dies kann von der konkreten Verlegung und Montage der Leckwellenleiter und deren Verbindung mit den Zugangspunkten abhängen sowie von bevorzugten Routen der Shuttles innerhalb des Regals.

Bei sämtlichen Ausführungsbeispielen kann daran gedacht sein, WLAN-Controller einzusetzen. WLAN-Controller können beispielsweise im Rahmen eines Mehrfachzugriffsverfahrens für eine störungsfreie Kommunikation einer Vielzahl von WLAN-Clients in einer Funkzelle sorgen, da üblicherweise stets nur ein WLAN-Client zur selben Zeit störungsfrei in einem Kanal kommunizieren kann. Insbesondere beim Einsatz mehrerer Zugangspunkte kann ein übergeordneter WLAN-Controller eine überlappungsfreie Kanalauswahl und somit eine störungsfreie Kommunikation bewirken.

Der Einsatz eines WLAN-Controllers kann beispielsweise eine Verfügbarkeit und eine Konfiguration verbessern und eine Kanalauswahl erleichtern. Bekanntermassen sind Frequenzbereiche, beispielsweise WLAN-Frequenzbereiche, in mehrere Kanäle aufgeteilt. Mehrere WLAN-Clients eines WLAN können jeweils in einem Kanal Daten mit dem Zugangspunkt austauschen. Der Einsatz von WLAN-Controllern kann auch die Durchführung von Funkzellenwechseln verbessern. Dies gilt insbesondere, wenn eine Verschlüsselung aufgeschaltet wird, was gemäss einem Ausführungsbeispiel der vorliegenden Erfindung ebenfalls angedacht sein kann.

Bei dem Funkzellenwechsel kann ein an sich bekanntes "Fast Roaming"-Verfahren zum Einsatz kommen, welches einen besonders schnellen und störungsfreien Funkzellenwechsel ermöglicht.

Weiterhin kann ein Austauschen sowie ein Hinzufügen neuer Zugangspunkte automatisiert werden.

Das Shuttle wird in einen sicheren Zustand versetzt, wenn es ein entsprechendes Funksignal empfängt, oder wenn in keinem der Netzwerke eine Funkverbindung zu einem Zugangspunkt besteht.

Der Übergang in den sicheren Zustand kann unmittelbar nach dem Empfang des entsprechenden Funksignals oder dem Verbindungsabbruch erfolgen. Alternativ kann der Übergang in den sicheren Zustand mit einer gewissen zeitlichen Verzögerung erfolgen. Die Verzögerung kann im Bereich von vorzugsweise wenigen Sekunden, noch bevorzugter im Bereich von unter einer Sekunde, beispielsweise im Bereich von einigen Millisekunden liegen.

Das Shuttle wird also vorzugsweise sowohl dann in den sicheren Zustand versetzt, wenn es ein entsprechendes Funksignal empfängt, als auch dann, wenn in keinem der Netzwerke eine Funkverbindung zu einem Zugangspunkt besteht. Das Abstrahlen des erstgenannten entsprechenden Funksignals kann sowohl von der Steuerungseinrichtung als auch unmittelbar beispielsweise von einem entsprechend angebundenen Sensor, welcher wie weiter oben bereits beschrieben beispielsweise das Öffnen einer in einen Gefahrenbereich führenden Tür erkennt, ausgelöst werden.

Das vorgenannte entsprechende Funksignal, um das Shuttle in den sicheren Zustand zu versetzen, kann ein Befehl sein, welcher dem Shuttle den Übergang in den sicheren Zustand vorgibt.

Das Versetzen des Shuttles in den sicheren Zustand verhindert beispielsweise ein Abstürzen des Shuttles am Ende eines Fahrwegs oder dergleichen; Beschädigungen, welche das Shuttle an der Lagerinfrastruktur verursachen könnte; Beschädigung des Shuttles selbst oder des von ihm transportierten Förderguts; sowie Personenschäden, falls sich aus irgendeinem Grund Menschen innerhalb des Regals aufhalten.

Ein sicherer Zustand kann beispielsweise ein unmittelbarer Stillstand, gegebenenfalls nach einer kurzen Phase der Geschwindigkeitsreduktion zur Verhinderung des Verlustes des Förderguts, sein. Das Shuttle kann einen sicheren Zustand auch dadurch einnehmen, dass es unterstützt von etwaigen Bordmitteln, insbesondere von entsprechenden Sensoren, einen sicheren Ort in seiner unmittelbaren Umgebung sucht, mit geringer Geschwindigkeit dorthin fährt, und dort in den Stillstand übergeht. Ein solcher Ort kann so gewählt sein, dass andere Shuttles nicht in ihrer Bewegung behindert werden und das stillstehende Shuttle keinerlei Risiko darstellt und möglichst leicht geborgen werden kann.

Ein solches Übergehen in einen sicheren Zustand wird, auch im Deutschen Sprachgebrauch, meist als fail-safe bezeichnet.

Für kabelgebundene Datennetze wie Ethernet ist zur Implementierung eines fail-safe beispielsweise das FSoE-Protokoll (fail-safe over ethernet oder fail-safe over etherCAT) bekannt. Hierbei kommt vorzugsweise das nachstehend beschriebene Black-Channel-Prinzip zum Einsatz.

Im Rahmen der vorliegenden Erfindung kann daran gedacht sein, dieses Protokoll oder ein ähnliches Protokoll über WLAN zu implementieren, um ein fail-safe des Shuttle-Systems zu erreichen.

Empfängt das Shuttle von keinem der Netzwerke ein Funksignal, so könnte es seine Fahrt theoretisch eigenständig fortsetzen. Hierfür kann es mit Bordmitteln wie Abstandssensoren und dergleichen ausgestattet sein. Ferner kann es, wie bereits beschrieben, einen Energiespeicher aufweisen. Ferner kann es einen Rechner, wie beispielsweise einen Mikrocontroller oder dergleichen aufweisen, welcher nach Erhalt eines entsprechenden Auftrags beispielsweise dafür sorgen kann, dass dieser Auftrag vollständig abgearbeitet wird. Allerdings wird im Rahmen der vorliegenden Erfindung vorgeschlagen, dass sich das Shuttle vorzugsweise niemals ohne zumindest eine bestehende Funkverbindung in bzw. zu einem der Netzwerke im Regal bewegt. Das Shuttle ist also vorzugsweise eingerichtet, sich - abgesehen von einer langsamen Fahrt zwecks Einnehmen des sicheren Zustands an einem sicheren Ort - nur dann im Regal zu bewegen, wenn in zumindest einem der Netzwerke eine Funkverbindung besteht.

Die unterbrechungsfreie Signalversorgung des Shuttles mit Funksignalen, welche gemäss Ausführungsbeispielen der vorliegenden Erfindung durch entsprechende Anordnung der Leckwellenleiter im Regal erreicht und durch die ebenfalls beschriebenen Verfahren zum Funkzellenwechsel weiter verbessert werden können, sorgen dafür, dass das Shuttle möglichst selten in den sicheren Zustand versetzt werden muss. Zugleich bewirkt das Übergehen in den sicheren Zustand nach Signallabbruch in beiden Netzwerken gemäss einer Ausführungsform der vorliegenden Erfindung, dass auch bei einem Signalabbruch in beiden Netzwerken keinerlei Gefahr vom betreffenden Shuttle ausgeht. Insbesondere die Kombination der vorbeschriebenen Merkmale ist vorteilhaft. Hierbei muss bedacht werden, dass es bei Shuttles mit Energiespeicher oft keinen Not-Aus-Mechanismus, beispielsweise durch Unterbrechung der Stromversorgung gibt. Ein möglichst zuverlässiges fail-safe-Konzept, wie es die vorliegende Erfindung vorschlägt, ist daher oftmals wichtig.

Die Informationen, welche das Shuttle empfangen muss, um nicht unmittelbar in den sicheren Zustand überzugehen, können safe-Daten sein. Die safe-Daten können beispielsweise die Information umfassen, dass in Bezug auf das gesamte Shuttle-System oder zumindest in Bezug auf einen Teil, bspw. eine Ebene oder eine Mehrzahl von Ebenen des Shuttle-Systems kein Nothalt, d.h. Not-Aus vorliegt. Alternativ oder zusätzlich können die safe-Daten Informationen darüber enthalten, dass entsprechende Sensoren von Türen und dergleichen keinen Zutritt in den Gefahrenbereich festgestellt haben. Werden eine oder mehrere der vorgenannten Informationen nicht übermittelt, weil beispielsweise ein Not-Aus in Bezug auf das Gesamtsystem vorliegt oder eine Tür geöffnet wurde, so werden alle Shuttles oder ein oder mehrere Shuttles in der Nähe der betreffenden Tür oder ein oder mehrere Shuttles in der oder den Ebene(n), zu der oder denen die Tür Zutritt gewährt, in den sicheren Zustand versetzt.

Diese Daten können nach dem Black-Channel-Prinzip übertragen werden, wonach die Art der Übertragung für die sicherheitsrelevanten safe-Daten unerheblich ist. Die Nutzung des Black-Channel-Prinzips setzt häufig voraus, dass es möglichst selten zu Verbindungsabbrüchen kommt, auch um ein Übergehen in den sicheren Zustand zu vermeiden. Eine hierfür nötige möglichst unterbrechungsfreie Signalversorgung wird durch die Leckwellenleiter sichergestellt.

Die Funksignale können redundant übertragen werden. Beispielsweise kann daran gedacht sein, von der Steuerungseinrichtung ausgehende Befehle zu verdoppeln und zeitgleich mittels Funksignalen beider Frequenzbereiche zu übertragen. Vorzugsweise werden also in beiden Frequenzbereichen zu jedem Zeitpunkt dieselben Befehle übertragen. Empfängt das Shuttle beide Befehle, so kann daran gedacht sein, dass einer der identischen Befehle eliminiert oder ignoriert wird. Dasselbe gilt auch für Befehle oder allgemein Informationen, die als Funksignale an das Shuttle übertragen werden sollen, aber nicht von der Steuerungseinrichtung ausgehen, sondern beispielsweise von einem Sensor, welcher das Öffnen einer Tür erkannt hat.

Derartige Verfahren zur redundanten Signalübertragung sind bekannt. Beispielsweise kann ein sogenanntes parallel redundancy protocol zum Einsatz kommen. Hierbei werden die zu übertragenden Daten vor ihrer Übertragung dupliziert.

Im Rahmen der vorliegenden Erfindung kann es vorgesehen sein, die vorstehend beschriebene redundante Übertragung der Funksignale mit dem ebenfalls vorbeschriebenen fail-safe-Mechanismus zu kombinieren. Gemäss diesem fail-safe-Mechanismus wird das Shuttle, wie bereits beschrieben, in einen sicheren Zustand versetzt, wenn in keinem der Frequenzbereiche eine Funkverbindung zu einem Zugangspunkt besteht, das Shuttle also keine Funksignale empfängt. Der Übergang in den sicheren Zustand kann, wie oben bereits beschrieben, mit einer gewissen zeitlichen Verzögerung erfolgen. Sämtliche Ausführungen betreffend die Übertragung von Befehlen gelten analog auch für die Übertragung anderer Informationen mit Hilfe von Funksignalen.

Es kann daran gedacht sein, dass die Leckwellenleiter dauerhaft Informationen in Form von Funksignalen abstrahlen. Das Shuttle-System kann dann so betrieben werden, dass das Shuttle in einen sicheren Zustand versetzt wird, falls es in keinem der Frequenzbereiche ein Funksignal empfängt. Nur dann besteht nämlich das Risiko, dass ein Shuttle ein Stopp-Signal nicht empfängt, welches wegen einer Störung oder dergleichen von der Steuerungseinrichtung über die Zugangspunkte und die Leckwellenleiter an das Shuttle gesendet wird.

Die Shuttles, insbesondere deren WLAN-Funkmodule oder WLAN-Clients, sind vorzugsweise eingerichtet, sowohl die vorstehend beschriebenen dauerhaft gesendeten Funksignale, welche aus sicherheitstechnischer Sicht stets empfangen werden müssen, damit das Shuttle nicht in den sicheren Zustand versetzt wird, als auch etwaige nicht sicherheitsrelevante Informationen und insbesondere Befehle, welche beispielsweise von der Steuerungseinrichtung übermittelt werden, zu empfangen.

Bei sämtlichen Ausführungsbeispielen kann daran gedacht sein, durch zusätzliche Zugangspunkte, Leckwellenleiter und zusätzliche Verbindungskabel eine weitergehende redundante Gestaltung des Shuttle-Systems zu erreichen.

Beispielsweise kann daran gedacht sein, mehrere Leckwellenleiter entlang der Hauptfahrwege zu installieren. Sind zwei Leckwellenleiter entlang desselben Hauptfahrwegs installiert, so können diese Teil desselben Netzwerks oder Teil verschiedener Netzwerke sein. In manchen Fällen kann eine solche Redundanz durch Installation mehrerer Leckwellenleiter je Hauptfahrweg gewünscht sein. In anderen Fällen kann bevorzugt ein einziger Leckwellenleiter je Hauptfahrweg installiert sein, weil bei zwei Leckwellenleitern im Hauptfahrweg Interferenzen auftreten können. Weiterhin verursachen Anschaffung und Installation zusätzlicher Leckwellenleiter Kosten, welche zumindest dann nicht zwingend nötig sind, wenn in einem gegebenen Hauptfahrweg auch die Funksignale von Leckwellenleitern der benachbarten Hauptfahrwege empfangbar sind, was meist der Fall ist. Ferner können zwei oder mehr Leckwellenleiter entlang desselben Hauptfahrwegs dann unvorteilhaft sein, wenn eine alternierende Anordnung der Leckwellenleiter gewünscht ist, welche vorstehend und insbesondere nachstehend in der Figurenbeschreibung dargestellt ist. Im Falle einer alternierenden Anordnung der Leckwellenleiter wird daher vorzugsweise auf zusätzliche Leckwellenleiter entlang der Hauptfahrwege verzichtet, und jeweils genau ein Leckwellenleiter je Hauptfahrweg installiert.

Vorstehend wurden zahlreiche Varianten und Details zu Ausführungsbeispielen von Shuttle-Systemen gemäss der vorliegenden Erfindung beschrieben. Nachstehend wird nochmals eine besonders vorteilhafte Kombination aufgezeigt.

Bei einem besonders bevorzugten Shuttle-System gehören die unmittelbaren Nachbarn eines zur ersten Gruppe gehörenden Leckwellenleiters in vertikaler und horizontaler Richtung zu der zweiten Gruppe. Die vorgenannten Richtungen verlaufen hierbei orthogonal zu einer Längsrichtung der Leckwellenleiter.

Ein besonders bevorzugtes Shuttle-System ist als Ebenen-gebundenes oder ungebundenes Shuttle-System ausgebildet. Ein ungebundenes Shuttle-System unterscheidet sich hierbei vorzugsweise durch Shuttle-Lifte, welche den Shuttles ein Wechseln der Ebene ermöglichen, von dem Ebenen-gebundenen Shuttle-System.

Bei dem besonders bevorzugten Shuttle-System kommen genau zwei Gruppen von Leckwellenleitern zum Einsatz, welche vorzugsweise WLAN-Funksignale in den Frequenzbereichen 2.4 GHz und 5 GHz abstrahlen und empfangen können. Die Verschaltung der Leckwellenleiter, d.h. die Anbindung von einem oder mehreren Leckwellenleitern an die Zugangspunkte sowie eine etwaige Verbindung mehrerer Leckwellenleiter durch HF-Verbindungskabel kann abhängig von den baulichen Bedingungen und Anforderungen an das Shuttle-System erfolgen.

Gemäss dem besonders bevorzugten Shuttle-System umfassen die Shuttles zumindest zwei, besonders bevorzugt sechs Antennen, welche an oder nahe bei den sechs Seiten der bevorzugt im Wesentlichen quaderförmigen Shuttles angeordnet sind. Diese Antennen sind mit einem WLAN-Client des Shuttles verbunden, welcher vorzugsweise so eingestellt ist, dass ein Funkzellenwechsel jeweils nur für einen der beiden Frequenzbereiche, und somit nicht zeitgleich in beiden Frequenzbereichen stattfindet.

Gemäss dem besonders bevorzugten Shuttle-System werden die Funksignale redundant, beispielsweise durch Verwendung von PRP, an die Shuttles übertragen. Hierbei kommt auch das vorbeschriebene Black-Channel-Prinzip zur Anwendung.

Wie weiter vorne im Hinblick auf die einzelnen Merkmale des besonders bevorzugten Shuttle-Systems beschrieben, führt dessen Aufbau in Verbindung mit dem Verfahren zum Betreiben zu folgenden Vorteilen:
Es besteht überall im Regal und unabhängig von einer Bewegungsrichtung der Shuttles jeweils eine Funkverbindung mit hoher Signalstärke und gutem Signal-Rauschen-Verhältnis zu zumindest einem Zugangspunkt. Durch die vorbeschriebene Anordnung der Leckwellenleiter werden Interferenzen und dergleichen vermieden und es wird gleichzeitig sichergestellt, dass bei jeder Bewegung des Shuttles, welche mit einem signifikanten Abfall der Signalstärke eines Funksignals eines der beiden Frequenzbereiche einhergeht, die Signalstärke des Funksignals des anderen Frequenzbereichs entsprechend zunimmt.

Durch die Client-seitige Einstellung zum Funkzellenwechsel (WLAN-Roaming) und die redundante Übertragung der Funksignale wird eine unterbrechungsfreie Kommunikation gewährleistet, so dass auch aus sicherheitstechnischer Sicht die Kommunikation allein über WLAN ausreicht, um das Shuttle-System ausreichend sicher zu betreiben. Weitere Kommunikationswege zwischen dem Shuttle und einem übergeordneten System sind in der Regel nicht nötig.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

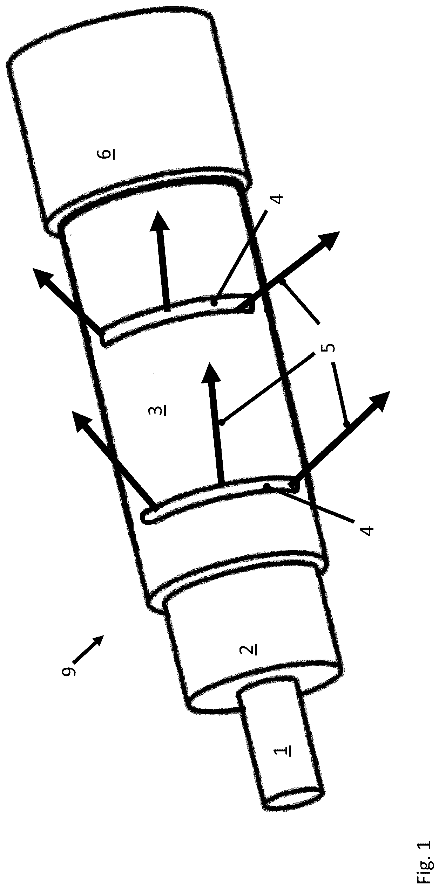

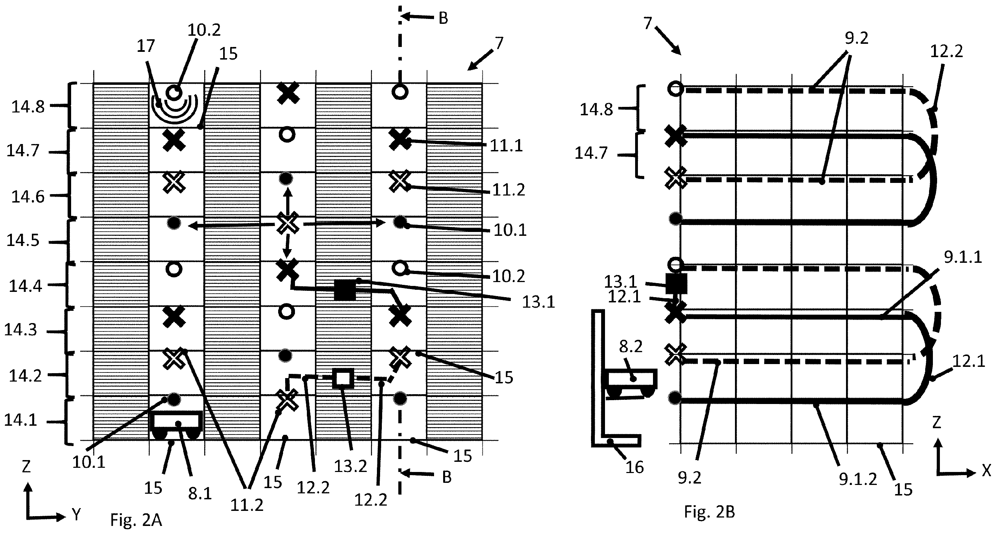

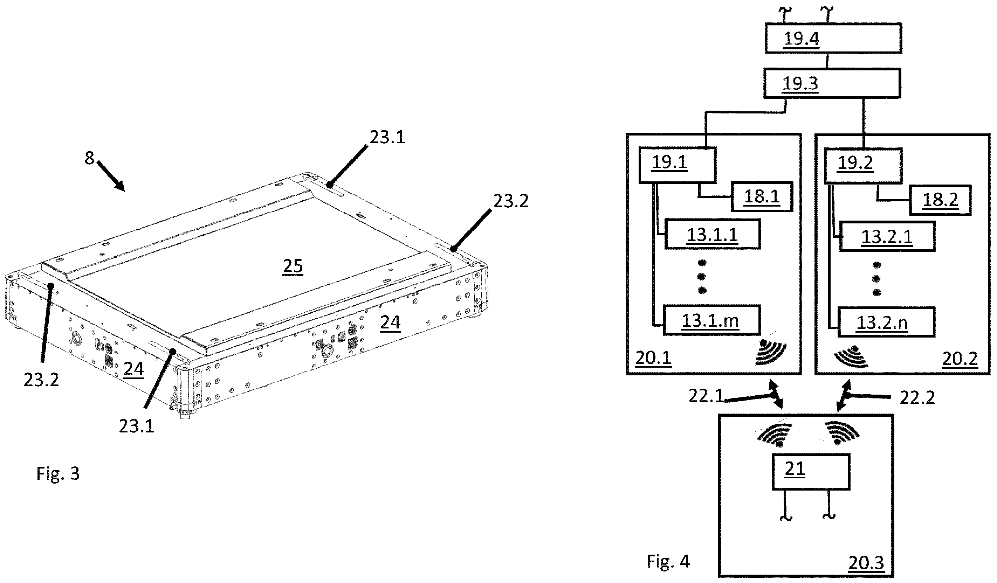

Figur 1 einen Leckwellenleiter 9, in Figur 2 einen vereinfachten und schematischen Ausschnitt eines Shuttle-Systems gemäss einem Ausführungsbeispiel der vorliegenden Erfindung, in Figur 3 ein Shuttle 8 sowie in Figur 4 eine Netzwerk-Topologie gemäss einem Ausführungsbeispiel der vorliegenden Erfindung.

### Ausführungsbeispiel

In Figur 1 ist ein Leckwellenleiter 9 in teilweise geschnittener perspektivischer Ansicht dargestellt. Ein Innenleiter 1, ein Dielektrikum 2 und ein Kabelmantel 6 sind erkennbar. Ferner sind Ausnehmungen 4 im Aussenleiter 3 erkennbar, durch welche Funksignale austreten, deren Ausbreitungsrichtung durch Pfeile 5 schematisch angedeutet ist.

Figur 2A zeigt einen Ausschnitt eines lediglich schematisch dargestellten Regals 7. Es sind acht Ebenen 14 erkennbar. Die erste Ebene wird mit 14.1 bezeichnet, die zweite mit 14.2, usw. Ferner sind ein Shuttle 8.1 und Hauptfahrwege 15 erkennbar. Leckwellenleiter-Enden mit Endwiderstand 10 sind durch Kreise angedeutet, Leckwellenleiter-Einspeisepunkte 11 sind durch Kreuze angedeutet. Die nicht ausgefüllten Kreuze und Kreise stellen hierbei diejenigen Leckwellenleiter-Enden 10.2 und Leckwellenleiter-Einspeisepunkte 11.2 dar, deren zugehörige Leckwellenleiter 9.2 Funksignale im Frequenzbereich 2,4 GHz übertragen. Dieses sind in Figur 2B gestrichelt dargestellt. Die ausgefüllten Kreuze und Kreise in Figur 2A stellen entsprechend diejenigen Leckwellenleiter-Enden 10.1 und Leckwellenleiter-

Einspeisepunkte 11.1 dar, deren zugehörige Leckwellenleiter 9.1 Funksignale im Frequenzbereich 5 GHz übertragen.

Ein Zugangspunkt 13.2 für die 2,4-GHz-Signale ist mit zugehörigen HF-Verbindungskabeln 12.2 (Hochfrequenz-Verbindungskabeln 12.2) dargestellt. Der vertikal darüber liegende Zugangspunkt 13.1 sorgt für die Übertragung der 5-Ghz-Signale. Weitere Zugangspunkte 13 sind der besseren Übersicht halber in Figur 2A nicht dargestellt, wobei natürlich jeder Leckwellenleiter-Einspeisepunkt 11 von einem Zugangspunkt 13 mit einem abzustrahlenden Signal versorgt wird.

In Bezug auf Figur 2A sind eine Y-Richtung und eine Z-Richtung angegeben. Ferner ist eine Schnittebene B-B angegeben.

Figur 2B zeigt eine Ansicht entlang der Linie B-B in Figur 2A. In Figur 2B ist ein Lift 16 erkennbar, welcher ein Shuttle 8.2 in Z-Richtung transportiert.

In Bezug auf Figur 2B sind eine X-Richtung und eine Z-Richtung angegeben.

Leckwellenleiter 9.1, 9.2 sind ebenso erkennbar wie HF-Verbindungskabel 12.1, 12.2 gegenüber des Lifts 16. Das HF-Verbindungskabel 12.2 verbindet zwei Leckwellenleiter 9.2 miteinander. Das HF-Verbindungskabel 12.1 verbindet zwei Leckwellenleiter 9.1.1, 9.1.2 miteinander.

Insbesondere in Bezug auf die Figuren 2A und 2B sei erwähnt, dass der besseren Übersicht halber nicht sämtliche dargestellten identischen Merkmale mit Bezugsziffern versehen sind.

Ferner ist anzumerken, dass der Lift 16 in Figur 2A nicht dargestellt ist.

Die Shuttles 8.1, 8.2 sind, ebenfalls der besseren Übersicht halber, ohne Fördergut dargestellt.

Das Regal 7 ist nicht massstabsgetreu dargestellt. In Y-Richtung können beispielsweise mehrfachtiefe Lagerkanäle vorhanden sein, auf deren Darstellung der besseren Übersicht halber vollständig verzichtet wurde.

In Figur 3 ist ein Shuttle 8 mit vier Antennen mit Rundstrahlcharakteristik 23.1, 23.2 dargestellt. Zwei Seitenflächen 24 und eine Oberseite 25 des Shuttles 8 sind gekennzeichnet.

Figur 4 zeigt eine Netzwerk-Topologie gemäss einem Ausführungsbeispiel der vorliegenden Erfindung. Hierbei bilden mehrere Zugangspunkte 13.1.1 bis 13.1.m zusammen mit einem WLAN-Controller 18.1 und einem Switch 19.1 ein erstes Netzwerk 20.1. Entsprechend bilden mehrere Zugangspunkte 13.2.1 bis 13.2.n zusammen mit einem WLAN-Controller 18.2 und einem Switch 19.2 ein zweites Netzwerk 20.2. Die Switches 19.1, 19.2 sind mit einem weiteren Switch 19.3 verbunden, bei dem es sich vorzugsweise um einen PRP-Switch handelt. Dieser Switch 19.3 ist wiederum mit einem vierten Switch 19.4 verbunden, an welchen weitere Komponenten, insbesondere über drahtgebundene Verbindungen, anschliessbar sind.

Sämtliche Zugangspunkte 13.1.1 bis 13.1.m und 13.2.1 bis 13.2.n sind eingerichtet, eine Funkverbindung zu einem WLAN-Client 21 in einem Netzwerk 20.3 eines Shuttles 8 aufzubauen, was in Figur 4 lediglich für die letztgenannten Zugangspunkte 13.1.m und 13.2.n angedeutet ist. Die Funkverbindungen bzw. im Allgemeinen Funksignale sind durch Pfeile 22.1, 22.2 nur angedeutet. Der WLAN-Client 21 ist mit weiteren Komponenten aus dem Netzwerk 20.3 des Shuttles 8 verbunden, was in Figur 4 aber nicht gesondert dargestellt ist.

Bezugnehmend auf die Figuren 1 bis 4 erklärt sich die Funktionsweise der erfindungsgemässen Vorrichtung folgendermassen:
Figur 1 zeigt schematisch die Funktion eines Leckwellenleiters 9. Das entlang des Leckwellenleiters 9 transportierte HF-Signal tritt über die Länge des Leckwellenleiters 9 hinweg als Funkwellen, somit also als Funksignal und insbesondere als WLAN-Signal durch die Ausnehmungen 4 aus, und verbreitet sich entlang der Haupt-Abstrahlrichtung. Letztere ist in Figur 1 durch Pfeile angedeutet, die teilweise mit der Bezugsziffer 5 versehen sind. Die Ausnehmungen 4 erstrecken sich nicht über den gesamten Umfang des Aussenleiters 3. Sie bilden also keinen Vollkreis, sondern nur einen Kreisbogen. Eine Rotation des Leckwellenleiters 9 um seine Längsachse verändert somit die Haupt-Abstrahlrichtung der Funksignale.

In dem in Figur 2 nur ausschnittsweise und schematisch dargestellten Regal 7 gemäss einer Ausführungsform der vorliegenden Erfindung verlaufen die Hauptfahrwege 15 der Shuttles 8.1, 8.2 entlang der X-Achse. Die Leckwellenleiter 9.1, 9.2 sind oberhalb dieser Hauptfahrwege 15 angebracht. Die in Figur 2 nicht gezeigten Ausnehmungen 4 sind hierbei so ausgerichtet, dass die Ausbreitungsrichtung 5 der Funksignale nach unten, d.h. in negativer Z-Richtung verläuft. Dies ist in Figur 2 der Übersicht halber lediglich in Ebene 14.8 durch die Wellen 17 angedeutet, welche unterhalb des Leckwellenleiter-Endes 10.2 erkennbar sind.

Entlang der Hauptfahrwege 15 empfangen die Shuttles 8.1, 8.2 durch die oberhalb dieser Hauptfahrwege 15 verlegten Leckwellenleiter 9.1, 9.2 das abgestrahlte Funksignal in ausreichender Signalstärke. Im Gegensatz zu Antennen, welche im Stand der Technik beispielsweise am Anfang oder Ende eines Hauptfahrwegs 15, in Figur 2B also in X-Richtung ganz links oder ganz rechts, angebracht wurden, werden die Funksignale des Leckwellenleiters 9 der vorliegenden Erfindung über die gesamte Länge des Fahrwegs 15 hinweg abgestrahlt, so dass Verbindungsabbrüche wegen zu starker Abschirmung durch Fördergüter, Bestandteile des Lagers 7 oder durch das Shuttle 8 selbst weitgehend vermieden werden.

Sofern es die in X-Richtung gemessene Länge der Fahrwege 15 und somit die mit zunehmender Länge der Leckwellenleiter 9.1, 9.2 zunehmende Signaldämpfung es zulässt, können die Leckwellenleiter 9.1, 9.2 endseits durch HF-Verbindungskabel 12.1, 12.2 verbunden werden.

Von den acht in Figur 2B erkennbaren Leckwellenleitern 9.1, 9.2 benötigen lediglich vier einen Anschluss an einen Zugangspunkt 13.1, 13.2. Dies ist in Figur 2B in Bezug auf die erste Ebene 14.1 und die dritte Ebene 14.3 erkennbar. Hier benötigt lediglich der in der dritten Ebene 14.3 montierte Leckwellenleiter 9.1.1 einen Anschluss über das (ganz links in Figur 2B sichtbare) HF-Verbindungskabel 12.1 zum Zugangspunkt 13.1. Das in den vorgenannten Leckwellenleiter 9.1.1 eingespeiste Signal versorgt auch den Leckwellenleiter 9.1.2 in der ersten Ebene 14.1, da beide Leckwellenleiter 9.1.1, 9.1.2 über das HF-Verbindungskabel 12.1 gegenüber des Zugangspunkts 13.1 (rechts in Figur 2B) miteinander verbunden sind.

Wechselt ein Shuttle 8.1, 8.2 den Hauptfahrweg 15, verbleibt aber in derselben Ebene 14, so kann ein Funkzellenwechsel nötig werden. Dasselbe gilt für den Fall, dass ein Shuttle 8.2 durch den Lift 16 auf eine andere Ebene 14 transportiert wird. Ein solcher Funkzellenwechsel wird also insbesondere bei einer Bewegung des Shuttles in Y- oder Z-Richtung nötig.

Da die Leckwellenleiter 9.1, 9.2, wie in Figur 2B erkennbar, entlang der Hauptfahrwege 15 verlegt sind, ist ein Funkzellenwechsel bei einer Bewegung des Shuttles 8.1, 8.2 in X-Richtung in der Regel nicht nötig.

Die Shuttles 8.1, 8.2 halten auf beiden Frequenzbereichen eine Funkverbindung zu denjenigen Zugangspunkten 13, deren Funksignale mit der grössten Signalstärke bei den Shuttles 8.1, 8.2 ankommen. Hierbei strahlen die Leckwellenleiter 9.1, 9.1.1, 9.1.2 Funksignale im Frequenzbereich von 5 GHz ab, während die Leckwellenleiter 9.2 Funksignale im Frequenzbereich von 2,4 GHz abstrahlen.

Aus Figur 2A geht hervor, dass in einer orthogonal zu den Hauptfahrwegen 15 und somit auch orthogonal zu einer Längsrichtung der Leckwellenleiter 9.1, 9.2 verlaufenden Querschnittsebene die Leckwellenleiter 9.1 und die Leckwellenleiter 9.2 so angeordnet sind, dass in horizontaler und in vertikaler Richtung die unmittelbaren Nachbarn der Leckwellenleiter 9.1 jeweils Leckwellenleiter 9.2 sind. Dies geht insbesondere aus einer Zusammenschau der Figuren 2A und 2B hervor. So sind beispielsweise die nächsten Nachbarn des mittig in Ebene 14.5 angeordneten Leckwellenleiters 9.2 jeweils Leckwellenleiter 9.1. Dies ist in Figur 2A durch Pfeile ausgehend vom vorgenannten Leckwellenleiter in Ebene 14.5 angedeutet. Hierbei ist zu beachten, dass die Leckwellenleiter 9.1, 9.2 orthogonal zur Zeichenebene der Figur 2A verlaufen, und in Figur 2A daher nur die entsprechenden Enden 10 und Einspeisepunkte 11 dargestellt sind.

Bewegt sich das in Figur 2A dargestellte Shuttle 8.1 innerhalb irgendeiner parallel zur Darstellung nach Figur 2A verlaufenden Querschnittsebene in horizontaler Richtung (Y-Richtung) oder in vertikaler Richtung (Z-Richtung), so wird dieses Shuttle 8.1 das Signal des (in Figur 2A in die Zeichnungsebene hinein verlaufenden und daher nicht erkennbaren) Leckwellenleiters 9.1, welcher sich an den Endwiderstand 10.1 oberhalb des Shuttles 8.1 anschliesst, mit zunehmend geringerer Signalstärke empfangen. Bei zunehmender Entfernung von der in Figur 2A dargestellten Position des Shuttles 8.1 wird somit ein Funkzellenwechsel nötig bezüglich der Signale der ersten Gruppe von Leckwellenleitern 9.1. Gleichzeitig bewegt sich das Shuttle 8.1 jedoch ausgehend von seiner in Figur 2A dargestellten Position in vertikaler Z-Richtung oder horizontaler Y-Richtung stets auf jeweils einen Leckwellenleiter 9.2 zu, welcher sich an die Einspeisepunkte 11.2 in Nachbarschaft zur Shuttle-Position gemäss Figur 2A anschliesst. Entfernt sich das Shuttle 8.1 von seiner in Figur 2A dargestellten Position in Y- oder Z.-Richtung, so wird also das Signal dieser Leckwellenleiter 9.2 stärker.

Da ein Funkzellenwechsel zu jedem Zeitpunkt nur hinsichtlich eines einzigen Frequenzbereichs stattfindet, sorgt die vorstehend im Hinblick auf die Querschnittsebene beschriebene Anordnung der Leckwellenleiter 9.1, 9.2 dafür, dass das Shuttle 8 die Funksignale im anderen Frequenzbereich gut empfangen kann. Dies wird ermöglicht, indem die in Figur 2A erkennbare Anordnung der Leckwellenleiter 9.1, 9.2 sicherstellt, dass bei jeder Bewegung des Shuttles in Y- oder Z-Richtung eine geringer werdende Signalstärke in einem Frequenzbereich mit einer besser werdenden Signalstärke im anderen Frequenzbereich einhergeht.

Die beiden Antennen 23.1 des Shuttles 8 in Figur 3 sind diametral entgegengesetzt zueinander auf der Oberseite 25 angeordnet, dasselbe gilt für die beiden Antennen 23.2. Die Antennen 23.1 sind eingerichtet, im Frequenzbereich 5 GHz zu kommunizieren, während die Antennen 23.2 im Frequenzbereich 2,4 GHz kommunizieren. Durch die verteilte Anordnung der vier Antennen 23.1, 23.2 auf der Shuttle-Oberseite 25 werden VerbindungsAbbrüche auch dann vermieden, wenn beispielsweise ein stark abschirmendes Fördergut (hier nicht dargestellt) auf der Oberseite 25 des Shuttles 8 platziert ist.

Die in Figur 4 gezeigte Topologie ermöglicht die redundante Übertragung von Befehlen, im Allgemeinen Funksignalen, an das Shuttle 8 bzw. an die Shuttles 8, 8.1, 8.2.

Ein Befehl kann als Signal zunächst über drahtgebundene Komponenten, beispielsweise von der (nicht gezeigten) Steuerungseinrichtung dem Switch 19.4 zugeleitet werden. Anschliessend wird das Signal oder der Befehl in dem als PRP-Switch ausgebildeten Switch 19.3 dupliziert. Der duplizierte Befehl wird dann im Wesentlichen zeitgleich an die beiden Switches 19.1, 19.2 weitergeleitet, gelangt also im Wesentlichen zeitgleich in die beiden Netzwerke 20.1, 20.2. Einer der Zugangspunkte 13.1.1 bis 13.1.m des ersten Netzwerks 20.1 und einer der Zugangspunkte 13.2.1 bis 13.2.n des zweiten Netzwerks 20.2 ist über eine Funkverbindung 22.1 bzw. 22.2 mit dem WLAN-Client 21 des Shuttles 8 verbunden. Das duplizierte Signal wird auf diese Weise an das Netzwerk 20.3 des Shuttles 8 weitergegeben und kann eine gewünschte Aktion des Shuttles 8 herbeiführen.

Neben einer (nicht dargestellten) Steuerungseinrichtung, welche mit dem Switch 19.4 verbunden sein kann, um einen Befehl oder im Allgemeinen ein Signal an das Shuttle 8 weiterzuleiten, kann auch eine SPS mit dem Switch 19.4 verbunden sein. Diese kann beispielsweise mit einem Sensor verbunden sein, der beispielsweise das Öffnen einer Tür überwacht (nicht dargestellt), und beim Öffnen der Tür einen Befehl an das Shuttle 8 sendet. Der Sensor kann auf diese Weise beispielsweise bewirken, dass das Shuttle 8 nach Empfang des entsprechenden Befehls in den sicheren Zustand übergeht.

Bei einem Funkzellenwechsel kann beispielsweise die Funkverbindung 22.2 zwischen einem der Zugangspunkte 13.2.1 bis 13.2.n des zweiten Netzwerks 20.2 unterbrochen werden, um eine neue Funkverbindung zu einem anderen Zugangspunkt 13.2.1 bis 13.2.n des zweiten Netzwerks 20.2 aufzubauen. Während der gesamten Dauer dieses Funkzellenwechsels zwischen den zwei Zugangspunkten 13.2 des zweiten Netzwerks bleibt die Funkverbindung 22.1 bestehen. So kommt zu jedem Zeitpunkt eines der wie vorbeschrieben duplizierten Signale bzw. Befehle über die Funkverbindung 22.1 beim Shuttle 8 an.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen:
Die Wellen 17, d.h. die Funksignale des Leckwellenleiter 9.2 in Figur 2A links oben, breiten sich entgegen der sehr schematischen Darstellung in Figur 2A nicht nur in einem Raum um den unterhalb des betreffenden Leckwellenleiters 9.2 liegenden Fahrwegs 15 aus, sondern auch darüber hinaus. Abhängig von der konkreten Bauart und etwaigen Abschirmungen erreichen die Funksignale der Leckwellenleiter 9 jedoch üblicherweise nicht nur den unmittelbar unterhalb liegenden Fahrweg 15, sondern auch die Räume oberhalb benachbarter Fahrwege. Dies ist auch abhängig von der Haupt-Abstrahlrichtung der Funksignale, weshalb vorwiegend zusätzliche Fahrwege 15 mit Funksignalen versorgt werden, welche unterhalb des betreffenden Leckwellenleiters 9 angeordnet sind.

Selbstverständlich sind die Wellen 17 in Figur 2 lediglich der Übersicht halber nur für den ganz links oben dargestellten Leckwellenleiter 9.2 angedeutet. Die Funksignale sämtlicher Leckwellenleiter 9, 9.1, 9.2 breiten sich in gleicher Weise aus.

Vorzugsweise sind die HF-Verbindungskabel 12 so montiert, dass vertikal übereinander angeordnete Leckwellenleiter 9 derselben Frequenz miteinander verbunden sind. Es kann jedoch in alternativen Ausführungen auch daran gedacht sein, alternativ oder zusätzlich auch horizontal nebeneinanderliegende Leckwellenleiter 9 derselben Frequenz über HF-Verbindungskabel 12 miteinander zu verbinden.

Die Signaldämpfung mit zunehmender Entfernung vom Zugangspunkt 13 ist frequenzabhängig. Es kann deshalb daran gedacht sein, nur die Leckwellenleiter 9.2 durch HF-Verbindungskabel 12.2 miteinander zu verbinden, wie rechts in Figur 2B gezeigt; aber auf Verbindungskabel 12.1 für die Leckwellenleiter 9.1, welche im Frequenzbereich von 5 GHz senden, zu verzichten. Dies kann nötig sein, wenn ein nur über das Verbindungskabel 12.1 und den daran angeschlossenen Leckwellenleiter 9.1.1 mit Signalen des Zugangspunkts 13.1 versorgter Leckwellenleiter 9.1.2 aufgrund des Signalverlusts nicht mit Signalen einer ausreichenden Stärke versorgt wird, und somit keine ausreichend starken Funksignale abstrahlen kann.

Es kann auch daran gedacht sein, dass die Leckwellenleiter 9.1, 9.1.1, 9.1.2 und die Leckwellenleiter 9.2 in demselben Frequenzbereich, beispielsweise mit 2,4 GHz oder mit 5 GHz senden. Wenn im Hinblick auf die Figuren von verschiedenen Frequenzbereichen die Rede ist, kann im Allgemeinen alternativ daran gedacht sein, dass es sich lediglich um Funksignale oder Funkverbindungen handelt, welche von verschiedenen Netzwerken 20.1, 20.2 ausgehen, aber denselben Frequenzbereich nutzen.

Die Funkverbindung 22.1 zwischen einem der Zugangspunkte 13.1.1 bis 13.1.m und dem WLAN-Client 21 muss also beispielsweise nicht zwingend im Frequenzbereich 5 GHz liegen, obwohl dies im Rahmen des in Figur 4 gezeigten Ausführungsbeispiels angedacht ist. Stattdessen kann sie, ebenso wie die Funkverbindung 22.2 im Frequenzbereich von 2,4 GHz liegen.

Die Lifte 16 sind zwar bevorzugt, aber optional. Die Shuttles 8.1, 8.2 können sich, vorzugsweise auf entsprechenden Rädern, im Regal 7 in X- und Y-Richtung fortbewegen. Lifte 16 erlauben auch eine Bewegung der Shuttles in Z-Richtung. Ohne Lifte 16 würde das in Figur 2 dargestellte System ein Ebenengebundenes Shuttle-System sein, mit den Liften 16 handelt es sich um ein ungebundenes System.

In Abwandlung von Figur 2A kann daran gedacht sein, nur jeweils einen einzigen Leckwellenleiter-Einspeisepunkt 11 mit genau einem Zugangspunkt 13 zu verbinden. Fällt ein Zugangspunkt 13 störungsbedingt aus, so wird bei dieser Bauweise nur ein möglichst geringer Bereich des Regals 7 nicht mit Funksignalen versorgt. Um die Kosten für Anschaffung und Einbau von Zugangspunkten 13 zu senken, kann auch daran gedacht sein, mehr als zwei Leckwellenleiter 9 mit demselben Zugangspunkt 13 zu verbinden.

In Bezug auf die Figuren 2A und 2B sei darauf hingewiesen, dass einige oder sämtliche der Leckwellenleiter 9.1, 9.2 auch so montiert sein können, dass die Haupt-Abstrahlrichtung nach oben, d.h. in positiver Z-Richtung, weist. Ausgehend von den Figuren 2A und 2B kann dies insbesondere für (dort nicht dargestellte) zusätzliche Leckwellenleiter gelten, welche eine oberhalb von Ebene 14.8 liegende zusätzliche Ebene 14 mit Funksignalen versorgen, wobei oberhalb dieser zusätzlichen Ebene keine Strukturen des Regals 7 vorhanden sind, an welchen diese Leckwellenleiter 9 angeordnet werden können.

In Bezug auf Figur 2B sei darauf hingewiesen, dass ein Teil der Zugangspunkte 13.1, 13.2, von denen in Figur 2B der Übersicht halber nur ein einziger Zugangspunkt 13.1 dargestellt ist, auch auf der rechts in Figur 2B dargestellten Seite des Regals 7 angeordnet sein kann. Entsprechend können HF-Verbindungskabel 12.1, 12.2 auch links in Figur 2B angeordnet sein. Eine alternierende Anordnung der Zugangspunkte 13.1, 13.2 auf gegenüberliegenden Seiten des Regals 7 kann für eine gleichmässigere Signalverteilung innerhalb des Regals 7 sorgen. Schliesslich ist die Signalstärke der vom Leckwellenleiter 9.1, 9.2 ausgehenden Funksignale in der Nähe des Zugangspunkts 13.1, 13.2 am stärksten. Mit der vorbeschriebenen alternierenden Anordnung sind die Bereiche der stärksten Signale nicht auf derselben Seite des Lagers 7 vorhanden. Durch eine beispielsweise in vertikaler Richtung, d.h. Z-Richtung und/oder in horizontaler Richtung, d.h. in X- und/oder in Y-Richtung alternierende Anordnung der Zugangspunkte 13.1, 13.2 auf den vorbeschriebenen Seiten des Regals 7 kann die gleichmässigere Signalverteilung erreicht werden.

Anstelle der vier Antennen 23.1, 23.2 gemäss Figur 3 kann daran gedacht sein, das Shuttle 8 beispielsweise nur mit zwei Antennen 23.1, 23.2 auszustatten. Sind nur zwei Antennen 23.1, 23.2 vorhanden, so können diese dennoch jeweils eine Funkverbindung 22.1, 22.2 zu einem der Netzwerke 20.1, 20.2 aufbauen und aufrechterhalten.

Allerdings sind bei nur zwei Antennen 23.1, 23.2 die Verbindungen zu jedem der Netzwerke 20.1, 20.2 nicht mehr redundant. Bricht die Verbindung von einer der Antennen 23.1, 23.2 zu dem entsprechenden Leckwellenleiter 9.1, 9.2 ab, so besteht zu dem betreffenden Netzwerk 20.1, 20.2 keine Funkverbindung 22.1, 22.2 mehr.

Ausgehend von Figur 3 kann auch daran gedacht sein, auf der Oberseite 25 weitere Antennen 23 anzuordnen, um die Redundanz weiter zu erhöhen und selbst im Falle sehr starker Signal-Abschirmungen innerhalb des Regals 7 eine Funkverbindung ausgehend von zumindest einer der Antennen 23 zu erhalten.

Einige oder alle der Antennen 23.1, 23.2 können auch an den Seitenflächen 24 des Shuttles 8 oder unterhalb eines diese Seitenflächen 24 bedeckenden Gehäuses angeordnet sein.

Bei sämtlichen Ausführungsformen kann alternativ zu den in Figur 3 dargestellten Antennen 23.1, 23.2 mit Rundstrahlcharakteristik daran gedacht sein, Richtantennen, gedruckte Antennen oder Sektor-Antennen einzusetzen.

Ferner kann daran gedacht sein, auch auf einer (in Figur 3 nicht dargestellten) Unterseite, d.h. auf einer der Oberseite 25 gegenüberliegenden Seite des Shuttles 8 zumindest eine Antenne 23 anzuordnen.

Es kann daran gedacht sein, eine oder mehrere Antennen 23 derselben oder unterschiedlicher Bauweise auf der Unterseite, der Oberseite 25 und/oder den Seitenflächen 24 anzuordnen.

In Bezug auf Figur 4 ist auf folgendes hinzuweisen:
Die mit den Zugangspunkten 13.1.1 bis 13.1.m und 13.2.1 bis 13.2.n verbundenen Leckwellenleiter 9 sind der Übersicht halber nicht eingezeichnet.

Figur 4 zeigt lediglich eine schematische Topologie und keine räumliche Anordnung der dargestellten Komponenten.

Es kann auch an mehr als zwei Netzwerke 20.1, 20.2 gedacht sein. Diese können auf mehr als zwei Frequenzbereichen arbeiten. Es kann aber auch angedacht sein, dass beide Netzwerke 20.1, 20.2 oder gegebenenfalls weiter hinzukommende Netzwerke in demselben Frequenzbereich arbeiten.

Alle oberhalb der Funkverbindungen 22.1, 22.2 in Figur 4 sichtbaren durchgezogenen Linien sind drahtgebundene Leitungen. Die durch diese Leitungen miteinander verbundenen Komponenten können als Bestandteile eines kabelgebundenen Datennetzes aufgefasst werden.

Die Netzwerke 20.1, 20.2 können zusätzliche Komponenten wie beispielsweise weitere Switches oder andere zusätzliche Komponenten umfassen.

Die WLAN-Controller 18.1, 18.2 sind keine zwingenden Bestandteile der Netzwerke 20.1, 20.2.

Das Netzwerk 20.3 umfasst vorzugsweise einige oder sämtliche Netzwerk-Komponenten im Shuttle 8, welche vorzugsweise untereinander drahtgebunden kommunizieren und über die Funkverbindungen 22.1, 22.2 drahtlos mit den Netzwerken 20.1, 20.2 kommunizieren.

In Bezug auf Figur 4 kann daran gedacht sein, dass sich die Netzwerke 20.1, 20.2 die Switches 19.1, 19.2 oder die WLAN-Controller 18.1, 18.2 teilen, wobei jedes Netzwerk 20.1, 20.2 seine eigenen Zugangspunkte 13.1.1, ..., 13.1.m; 13.2.1, ..., 13.2.n aufweist. Dies kann insbesondere beim Einsatz von VLAN angedacht sein, wobei sich die virtuellen Netzwerke entsprechende Hardware-Komponenten teilen. Um die gewünschte Redundanz zu erreichen, teilen sich die Netzwerke 20.1, 20.2 jedoch die Zugangspunkte 13.1.1, ..., 13.1.m; 13.2.1, ..., 13.2.n nicht.

Die vorstehenden Überlegungen schliessen nicht aus, dass die vorgenannten Komponenten, und auch die physisch getrennten Zugangspunkte beider Netzwerke gemeinsam in einem Gehäuse untergebracht sind. Massgeblich für die Redundanz ist, dass zumindest zwei Netzwerke 20.1, 20.2 vorliegen, welche jeweils zumindest einen eigenen Zugangspunkt 13.1.1, 13.2.1 aufweisen, auch wenn diese Netzwerke 20.1, 20.2 sich beispielsweise einen Switch 19 teilen.

Der WLAN-Client 21 in dem Netzwerk 20.3 des Shuttles kann eine Komponente umfassen, welche analog dem PRP-Switch 19.3 arbeitet, sowie zwei Funkmodule, welche analog den Netzwerken 20.1, 20.2 arbeiten. Sendet das Shuttle Daten zu den Leckwellenleitern bzw. zu den Zugangspunkten 13.1.1, ..., 13.1.m; 13.2.1, ..., 13.2.n, so können diese also innerhalb des WLAN-Clients 21 dupliziert und über zwei separate Funkverbindungen 22.1, 22.2 zu den beiden Netzwerken 20.1, 20.2 übertragen werden.

### Bezugszeichenliste

| | | | | | |
|---|---|---|---|---|---|
| 1 | Innenleiter | 34 | | | |
| 2 | Dielektrikum | 35 | | | |
| 3 | Aussenleiter | 36 | | | |
| 4 | Ausnehmung | 37 | | | |
| 5 | Ausbreitungsrichtung | 38 | | | |
| 6 | Kabelmantel | 39 | | | |
| 7 | Regal | 40 | | | |
| 8 | Shuttle | 41 | | | |
| 9 | Leckwellenleiter | 42 | | | |
| 10 | Leckwellenleiter-Ende mit Endwiderstand | 43 | | | |
| 11 | Leckwellenleiter-Einspeisepunkt | 44 | | | |
| 12 | HF-Verbindungskabel | 45 | | | |
| 13 | Zugangspunkt | 46 | | | |
| 14 | Ebene | 47 | | | |
| 15 | Hauptfahrweg | 48 | | | |
| 16 | Lift | 49 | | | |
| 17 | Wellen | 50 | | | |
| 18 | WLAN-Controller | 51 | | | |
| 19 | Switch | 52 | | | |
| 20 | Netzwerk | 53 | | | |
| 21 | WLAN-Client | 54 | | | |
| 22 | Funksignal / Funkverbindung | 55 | | | |
| 23 | Antenne | 56 | | | |
| 24 | Seitenfläche | 57 | | | |
| 25 | Oberseite | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Shuttle-System umfassend
ein Regal (7),
ein Shuttle (8) sowie
eine Steuerungseinrichtung,
wobei das Shuttle (8) eingerichtet ist, Befehle von der Steuerungseinrichtung zu empfangen, welche mittels Funksignale übertragen werden,
einen dem Regal (7) zugeordneten Leckwellenleiter (9), welcher eingerichtet ist, die Funksignale abzustrahlen,
**dadurch gekennzeichnet, dass**
dem Regal (7) mehrere Leckwellenleiter (9.1, 9.2) zugeordnet sind, wobei eine erste Gruppe von Leckwellenleitern (9.1) mit einer ersten Gruppe von Zugangspunkten (13.1) verbunden ist, und wobei eine zweite Gruppe von Leckwellenleitern (9.2) mit einer zweiten Gruppe von Zugangspunkten (13.2) verbunden ist,
wobei das Shuttle-System ferner m Leckwellenleiter (9.1) und maximal m Zugangspunkte (13.1**)** aufweist, welche jeweils die erste Gruppe von Leckwellenleitern (9.1) und Zugangspunkten (13.1) bilden und Teil eines ersten Netzwerks (20.1) sind, und wobei die m Leckwellenleiter (9.1) zur Abstrahlung von Funksignalen des ersten Netzwerks (20.1) mit den maximal m Zugangspunkten (13.1) verbunden sind, welche die m Leckwellenleiter (9.1) mit den abzustrahlenden Funksignalen versorgen, ferner weist das Shuttle-System n Leckwellenleiter (9.2) und maximal n Zugangspunkte (13.2) auf, welche jeweils die zweite Gruppe von Leckwellenleitern (9.1) und Zugangspunkten (13.1) bilden und Teil eines zweiten Netzwerks (20.2) sind, und wobei die n Leckwellenleiter (9.2) zur Abstrahlung von Funksignalen des zweiten Netzwerks mit den maximal n Zugangspunkten (13.2) verbunden sind,
wobei die Funksignale des ersten Netzwerks (20.1), welche von den m Leckwellenleitern (9.1) der ersten Gruppe abgestrahlt werden, in einem ersten Frequenzbereich liegen, und dass die Funksignale des zweiten Netzwerks (20.2), welche von den n Leckwellenleitern (9.2) der zweiten Gruppe abgestrahlt werden, in einem zweiten Frequenzbereich liegen,
wobei zumindest ein Teil der Leckwellenleiter (9) entlang eines Hauptfahrwegs (15) des Shuttles (8) verlaufen, und wobei in einer orthogonal zu diesem Hauptfahrweg (15) verlaufenden Querschnittsebene die Leckwellenleiter (9.1, 9.2) beider Gruppen derart alternierend angeordnet sind, dass die unmittelbaren Nachbarn eines zur ersten Gruppe gehörenden Leckwellenleiters (9.1) ausschliesslich Leckwellenleiter (9.2) der zweiten Gruppe sind.

2. Shuttle-System nach Anspruch 1, **dadurch gekennzeichnet, dass** der Leckwellenleiter (9) mit einem Zugangspunkt (13) verbunden ist und von diesem mit einem WLAN-Signal versorgt wird.

3. Shuttle-System nach einem der vorhergehenden Ansprüche, **dadurch gekennzeichnet, dass** das Shuttle (8) zumindest zwei Antennen umfasst.

4. Verfahren zum Betreiben eines Shuttle-Systems nach einem der vorangehenden Ansprüche, aufweisend folgende Schritte:
- Übertragen eines Funksignals von der Steuerungseinrichtung über den Leckwellenleiter (9) auf das Shuttle (8)
im Wesentlichen gleichzeitige Übertragung von Funksignalen des ersten und des zweiten Netzwerks (20.1, 20.2) von den entsprechenden Leckwellenleitern (9.1, 9.2) auf das Shuttle (8), wobei jeweils eine Funkverbindung zwischen dem Shuttle (8) und den Zugangspunkten (13.1, 13.2) beider Netzwerke (20.1, 20.2) aufgebaut und aufrechterhalten wird,
wobei das Shuttle (8) in einen sicheren Zustand versetzt wird, wenn es ein entsprechendes Signal empfängt, oder wenn in keinem der Netzwerke (20.1, 20.2) eine Funkverbindung zu einem Zugangspunkt (13.1, 13.2) besteht.

5. Verfahren nach Anspruch 4, zum Betreiben eines Shuttle-Systems nach Anspruch 2, **dadurch gekennzeichnet, dass** eine Funkverbindung zwischen dem Shuttle (8) und dem Zugangspunkt (13), welcher mit dem Leckwellenleiter (9) verbunden ist, aufgebaut und aufrechterhalten wird.

6. Verfahren nach einem der Ansprüche 4 oder 5, wobei ein Funkzellenwechsel mit folgenden Schritten erfolgt:
- Ermitteln zumindest einer Signaleigenschaft der Funksignale innerhalb beider Netzwerke (20.1, 20.2)
- Feststellen, ob innerhalb eines der beiden Netzwerke (20.1, 20.2) Funksignale mit zumindest einer besseren Signaleigenschaft empfangbar sind, welche von einem Zugangspunkt (13.1, 13.2) ausgehen, zu dem momentan keine Funkverbindung besteht, sowie,
- falls solche Funksignale mit besserer Signalqualität empfangbar sind, Durchführung eines Funkzellenwechsels durch Aufbau einer Funkverbindung zu dem betreffenden Zugangspunkt (13.1, 13.2) und Beendigung der vormals bestehenden Funkverbindung,
- wobei während dieses Funkzellenwechsels die Funkverbindung im anderen Netzwerk (20.1, 20.2) ohne Durchführung eines Funkzellenwechsels aufrechterhalten wird.

7. Verfahren nach einem der Ansprüche 4 bis 6, wobei die Funksignale redundant übertragen werden.

8. Verfahren nach zumindest einem der Ansprüche 4 bis 7 zum Betreiben eines Shuttle-Systems mit einem ersten Hauptfahrweg (15) und einem zweiten Hauptfahrweg (15), welche durch einen Lagerkanal miteinander verbunden sind, **dadurch gekennzeichnet, dass** ein unbeladenes Shuttle diesen Lagerkanal nutzt, um von dem ersten Hauptfahrweg (15) in den zweiten Hauptfahrweg (15) zu gelangen.

## Claims

1. A shuttle system comprising
a rack (7),
a shuttle (8), and
a control device,
wherein the shuttle (8) is configured to receive commands from the control device, which are transmitted by means of radio signals,
a leaky waveguide (9) associated with the rack (7), which is configured to radiate the radio signals,
**characterized in that**
a plurality of leaky waveguides (9.1, 9.2) are associated with the rack (7),
wherein a first group of leaky waveguides (9.1) is connected to a first group of access points (13.1), and wherein a second group of leaky waveguides (9.2) is connected to a second group of access points (13.2),
wherein the shuttle system further comprises m leaky waveguides (9.1) and at most m access points (13.1), which respectively form the first group of leaky waveguides (9.1) and access points (13.1) and are part of a first network (20.1), and wherein the m leaky waveguides (9.1) are connected to the at most m access points (13.1) for radiating radio signals of the first network (20.1), which supply the m leaky waveguides (9.1) with the radio signals to be radiated, the shuttle system further comprises n leaky waveguides (9.2) and at most n access points (13.2), which respectively form the second group of leaky waveguides (9.1) and access points (13.1) and are part of a second network (20.2), and wherein the n leaky waveguides (9.2) are connected to the at most n access points (13.2) for radiating radio signals of the second network,
wherein the radio signals of the first network (20.1), which are radiated by the m leaky waveguides (9.1) of the first group, are in a first frequency range, and that the radio signals of the second network (20.2), which are radiated by the n leaky waveguides (9.2) of the second group, are in a second frequency range,
wherein at least a part of the leaky waveguides (9) run along a main travel path (15) of the shuttle (8), and wherein in a cross-sectional plane running orthogonally to said main travel path (15), the leaky waveguides (9.1, 9.2) of both groups are arranged alternatingly such that the immediate neighbors of a leaky waveguide (9.1) belonging to the first group are exclusively leaky waveguides (9.2) of the second group.

2. The shuttle system according to claim 1, **characterized in that** the leaky waveguide (9) is connected to an access point (13) and is supplied with a WLAN signal by the same.

3. The shuttle system according to any one of the preceding claims, **characterized in that** the shuttle (8) comprises at least two antennas.

4. A method for operating a shuttle system according to any one of the preceding claims, comprising the following steps:
• transmitting a radio signal from the control device via the leaky waveguide (9) to the shuttle (8) substantially simultaneous transmission of radio signals of the first and the second network (20.1, 20.2) from the corresponding leaky waveguides (9.1, 9.2) to the shuttle (8), wherein in each case a radio connection is established and maintained between the shuttle (8) and the access points (13.1, 13.2) of both networks (20.1, 20.2), wherein the shuttle (8) is put into a safe state if it receives a corresponding signal, or if in neither of the networks (20.1, 20.2) a radio connection to an access point (13.1, 13.2) exists.

5. The method according to claim 4, for operating a shuttle system according to claim 2, **characterized in that** a radio connection is established and maintained between the shuttle (8) and the access point (13) connected to the leaky waveguide (9).

6. The method according to any one of claims 4 or 5, wherein a cell change is carried out with the following steps:
• determining at least one signal characteristic of the radio signals within both networks (20.1, 20.2),
• detecting whether within one of the two networks (20.1, 20.2) radio signals having at least one better signal characteristic can be received, which originate from an access point (13.1, 13.2) to which currently no radio connection exists, as well as,
• if such radio signals with better signal quality can be received, carrying out a cell change by establishing a radio connection to the relevant access point (13.1, 13.2) and terminating the previously existing radio connection,
• wherein during this cell change the radio connection in the other network (20.1, 20.2) is maintained without carrying out a cell change.

7. The method according to any one of claims 4 to 6, wherein the radio signals are transmitted redundantly.

8. The method according to at least one of claims 4 to 7 for operating a shuttle system with a first main travel path (15) and a second main travel path (15), which are connected to one another by a storage channel, **characterized in that** an unloaded shuttle uses this storage channel to travel from the first main travel path (15) into the second main travel path (15).

## Revendications

1. Système de navette comprenant un rayonnage (7), une navette (8) ainsi qu'un dispositif de commande, dans lequel la navette (8) est conçue pour recevoir des ordres du dispositif de commande, lesquels sont transmis au moyen de signaux radio, un guide d'ondes à fuite (9) associé au rayonnage (7), lequel est conçu pour émettre les signaux radio, **caractérisé en ce que** plusieurs guides d'ondes à fuite (9.1, 9.2) sont associés au rayonnage (7), dans lequel un premier groupe de guides d'ondes à fuite (9.1) est connecté à un premier groupe de points d'accès (13.1), et dans lequel un deuxième groupe de guides d'ondes à fuite (9.2) est connecté à un deuxième groupe de points d'accès (13.2), dans lequel le système de navette comprend en outre m guides d'ondes à fuite (9.1) et au maximum m points d'accès (13.1), qui forment chacun le premier groupe de guides d'ondes à fuite (9.1) et de points d'accès (13.1) et font partie d'un premier réseau (20.1), et dans lequel les m guides d'ondes à fuite (9.1) pour l'émission de signaux radio du premier réseau (20.1) sont connectés aux au maximum m points d'accès (13.1), qui alimentent les m guides d'ondes à fuite (9.1) avec les signaux radio à émettre, en outre le système de navette comprend n guides d'ondes à fuite (9.2) et au maximum n points d'accès (13.2), qui forment chacun le deuxième groupe de guides d'ondes à fuite (9.1) et de points d'accès (13.1) et font partie d'un deuxième réseau (20.2), et dans lequel les n guides d'ondes à fuite (9.2) pour l'émission de signaux radio du deuxième réseau sont connectés aux au maximum n points d'accès (13.2), dans lequel les signaux radio du premier réseau (20.1), qui sont émis par les m guides d'ondes à fuite (9.1) du premier groupe, se situent dans une première plage de fréquences, et que les signaux radio du deuxième réseau (20.2), qui sont émis par les n guides d'ondes à fuite (9.2) du deuxième groupe, se situent dans une deuxième plage de fréquences, dans lequel au moins une partie des guides d'ondes à fuite (9) s'étend le long d'une voie de circulation principale (15) de la navette (8), et dans lequel, dans un plan de section transversale s'étendant orthogonalement à cette voie de circulation principale (15), les guides d'ondes à fuite (9.1, 9.2) des deux groupes sont agencés de manière alternée de telle sorte que les voisins immédiats d'un guide d'ondes à fuite (9.1) appartenant au premier groupe sont exclusivement des guides d'ondes à fuite (9.2) du deuxième groupe.

2. Système de navette selon la revendication 1, **caractérisé en ce que** le guide d'ondes à fuite (9) est connecté à un point d'accès (13) et est alimenté par celui-ci avec un signal WLAN.

3. Système de navette selon l'une quelconque des revendications précédentes, **caractérisé en ce que** la navette (8) comprend au moins deux antennes.

4. Procédé de fonctionnement d'un système de navette selon l'une quelconque des revendications précédentes, comprenant les étapes suivantes : - la transmission d'un signal radio depuis le dispositif de commande via le guide d'ondes à fuite (9) vers la navette (8) - la transmission essentiellement simultanée de signaux radio du premier et du deuxième réseau (20.1, 20.2) depuis les guides d'ondes à fuite (9.1, 9.2) correspondants vers la navette (8), dans lequel une liaison radio est respectivement établie et maintenue entre la navette (8) et les points d'accès (13.1, 13.2) des deux réseaux (20.1, 20.2), dans lequel la navette (8) est mise dans un état de sécurité lorsqu'elle reçoit un signal correspondant, ou lorsqu'une liaison radio vers un point d'accès (13.1, 13.2) n'existe dans aucun des réseaux (20.1, 20.2).

5. Procédé selon la revendication 4, pour le fonctionnement d'un système de navette selon la revendication 2, **caractérisé en ce qu'**une liaison radio est établie et maintenue entre la navette (8) et le point d'accès (13), qui est connecté au guide d'ondes à fuite (9).

6. Procédé selon l'une quelconque des revendications 4 ou 5, dans lequel un changement de cellule radio est effectué avec les étapes suivantes : - la détermination d'au moins une propriété de signal des signaux radio à l'intérieur des deux réseaux (20.1, 20.2), - le fait de constater si, à l'intérieur de l'un des deux réseaux (20.1, 20.2), des signaux radio avec au moins une meilleure propriété de signal peuvent être reçus, lesquels proviennent d'un point d'accès (13.1, 13.2) avec lequel aucune liaison radio n'existe actuellement, et, - si de tels signaux radio avec une meilleure qualité du signal peuvent être reçus, l'exécution d'un changement de cellule radio par l'établissement d'une liaison radio avec le point d'accès (13.1, 13.2) concerné et la fin de la liaison radio existant précédemment, dans lequel, pendant ce changement de cellule radio, la liaison radio dans l'autre réseau (20.1, 20.2) est maintenue sans effectuer de changement de cellule radio.

7. Procédé selon l'une quelconque des revendications 4 à 6, dans lequel les signaux radio sont transmis de manière redondante.

8. Procédé selon au moins l'une des revendications 4 à 7 pour le fonctionnement d'un système de navette avec une première voie de circulation principale (15) et une deuxième voie de circulation principale (15), qui sont reliées l'une à l'autre par un canal de stockage, **caractérisé en ce qu'**une navette non chargée utilise ce canal de stockage pour passer de la première voie de circulation principale (15) à la deuxième voie de circulation principale (15).
